# EUROPÄISCHE PATENTSCHRIFT

(11) **EP 2 024 260 B1**
(45) Veröffentlichungstag und Bekanntmachung des Hinweises auf die Patenterteilung: **22.02.2012**
(21) Anmeldenummer: 07764551.3
(22) Anmeldetag: 29.05.2007
(51) Int. Cl.: B65G 33/06, B65G 47/26, B62D 65/00

(54) **FÖRDEREINRICHTUNG UND FÖRDERVERFAHREN**
CONVEYING DEVICE, AND CONVEYING METHOD
DISPOSITIF DE TRANSPORT ET PROCÉDÉ DE TRANSPORT

(30) Priorität: 30.05.2006 DE 202006008659 U
(43) Veröffentlichungstag der Anmeldung: 18.02.2009
(73) Patentinhaber: KUKA Systems GmbH, 86165 Augsburg (DE)
(72) Erfinder: STURM, Thomas, 85259 Wiedenzhausen (DE)
(74) Vertreter: Ernicke, Klaus Stefan
(86) Internationale Anmeldenummer: PCT/EP2007/004739
(87) Internationale Veröffentlichungsnummer: WO 2007/137813

(56) Entgegenhaltungen:
- DE-A1- 2 701 471
- US-A- 5 396 981

## Beschreibung

Die Erfindung betrifft eine Fördereinrichtung und ein Förderverfahren zum Transport von Bauteilen, insbesondere Karosseriebauteilen, mit den Merkmalen im Oberbegriff des Verfahrens- und Vorrichtungshauptanspruchs.

In Produktionslinien für Fahrzeugkarosserien werden die in ihrer Art und Größe unterschiedlichen Bauteile mit mehr oder weniger aufwändigen Systemen den einzelnen Bearbeitungsstationen zugeführt. Hierbei kommen als Förderer Rutschen, Dornmagazine und Transportwagen mit Stapelhalterungen für die Bauteile in Einsatz. Diese Systeme eignen sich besonders für stapelfähige Bauteile. Wenn Bauteile nicht stapelfähig sind, können Bauteilwägen mit speziellen Klinkenmagazinen verwendet werden.

Stapelfähige Bauteile, bei denen mangels Führungsmöglichkeiten eine Zuführung mit Rutschen oder auf Gleitstangen nicht möglich ist, werden mit Stapeln (ohne Klinken) auf Transportwägen zugeführt. Damit der Produktionsablauf nicht unterbrochen wird, wenn der Wagen keine Bauteile mehr enthält und gegen einen voll bestückten neuen Wagen getauscht werden muss, sind mindestens zwei Bauteilwägen in den Stationen erforderlich. Hierbei kann z.B. der eine voll bestückte Wagen in die Arbeitsposition geschoben werden, während der Roboter noch Bauteile aus dem anderen Wagen entnimmt. Bei diesen vorbekannten Zuführsystemen besteht ein großer Flächenbedarf und ein hoher Sicherheitsaufwand. Es kann auch zu Taktzeitverlusten kommen, weil die zum Entladen eingesetzten Roboter die Bauteile im Stapel erst suchen müssen. Wenn Klinkensäulen vorhanden sind, können diese Störkonturen für Entnahmegreifer bilden. Problematisch sind außerdem die Ergonomie und der Bau- und Kostenaufwand.

Die DE 27 01 471 A1 zeigt eine Fördereinrichtung für Schallplatten, die auf drei Schnecken stehend, rutschfest, staufrei und mit gegenseitigem Abstand transportiert werden. Die Schallplatten werden in zwei mit Abstand aufeinander folgenden Vorgängen bedruckt, wobei sie jeweils von den Förderschnecken abgehoben und in Druckposition gebracht sowie anschließend wieder auf die Schnecken abgesenkt und weitertransportiert werden. Um während der Bedruckungszeit eine Kollision der nächsten ankommenden Schallplatte und der vom Druckvorgang zurückgebrachten Schallplatte zu vermeiden haben die Schnecken Gewindeabschnitte mit unterschiedlichen Steigungen. Diese Anordnung bewirkt, dass bei einem kontinuierlichen Schneckentransport während einer Schneckenumdrehung genügend Zeit zum Bedrucken der abgehobenen Schallplatte und für deren anschließenden kollisionsfreien Weitertransport mit erhöhter Geschwindigkeit besteht.

Aus der US 5,396,981 A ist eine biegsame Förderschnecke für Schüttgüter bekannt.

Es ist Aufgabe der vorliegenden Erfindung, eine bessere Fördertechnik aufzuzeigen.

Die Erfindung löst diese Aufgabe mit den Merkmalen im Verfahrens- und Vorrichtungshauptanspruch. Mit der erfindungsgemäßen Fördertechnik können stapelbare und nicht stapelbare Bauteile platzsparend, kostengünstig und sicher transportiert werden. Auf spezielle Bauteilaufnahmen kann in vielen Fällen verzichtet werden. Die Fördertechnik kann für unterschiedlichste Aufgaben und an beliebigen Stellen eingesetzt werden.

Die Fördereinrichtung kann unterschiedliche Funktionen haben und z.B. als Entstapler und/oder als Stauförderer ausgebildet sein. In beiden Fällen kann die Relativgeschwindigkeit zwischen den Bauteilen und dem Wendelförderer in Förderrichtung durch eine entsprechende Einrichtung beeinflusst und verändert werden. Bei einem Entstapler können hierbei aus einem ruhenden und geführten Bauteilstapel die Bauteile einzeln entnommen und dann längs des Wendelförderers transportiert werden. Bei einem Stauförderer kann im Verlaufe der Förderstrecke ein Halten und Aufstauen oder Aufstapeln von geförderten Bauteilen stattfinden, ohne dass der Wendelförderer angehalten werden muss und die Förderfunktion in anderen staufreien Bereichen unterbrochen werden muss. Ein Stauförderer hat hierbei den besonderen Vorteil, dass er eine ungleichmäßige und insbesondere intermittierende Beladung des Wendelförderers ermöglicht, wobei die zwischen den Bauteilen entstehenden Lücken automatisch geschlossen werden. Die Relativgeschwindigkeit zwischen den Bauteilen und dem Wendelförderer in Förderrichtung kann verändert werden, indem eine Einrichtung vorhanden ist, die ein Durchrutschen der in Förderrichtung gestoppten Bauteile gegenüber dem bewegten Wendelförderer ermöglicht. Durch die Stau- oder Stapelbildung und die dortige regelmäßige Bauteilanordnung kann beim Entladen eine gleichmäßige Bauteilabgabe stattfinden, was für eine störungsfreie Zuführung und Weiterbehandlung von Bauteilen in einer Bearbeitungsstation günstig ist und auch automatisierten Handhabungssystemen mit Robotern oder dergleichen entgegen kommt.

Die Fördereinrichtung kann ferner zum automatischen und sicheren Ausschleusen von Bauteilen und darüber hinaus auch generell zur Bildung eines Bauteilpuffers im Fall von Störungen oder dgl. eingesetzt werden. Die Pufferfunktion erhöht die Verfügbarkeit der Fördereinrichtung, der endseitig angeschlossenen Zuführ- und Entnahmeeinrichtungen und auch der Gesamtanlage.

Die beanspruchte Fördereinrichtung hat ferner den Vorteil, dass sie sich in Sicherheitssysteme an Bearbeitungsstationen konfliktfrei einbinden lässt. Insbesondere kann sie in Durchlassöffnungen von Schutzzäunen installiert werden, wobei die Unfallsicherheit für den Bediener an der außen liegenden Beladeseite gewährleistet ist.

Die beanspruchte Fördereinrichtung erlaubt es, die Bauteile auch bei komplizierter Formgebung sicher zu führen und zu transportieren. Der Bauteiltransport kann in beliebiger Lage hängend, stehend oder liegend erfolgen. Besondere Vorteile bestehen bei Blechbauteilen, die mittels formschlüssigen Eingriff eines Randes, Flansches oder Vorsprungs an einer Wendel des Wendelförderers transportiert werden. Die Förderwellen des Förderers können in beliebiger Zahl vorhanden sein und wahlweise eine reine Förderfunktion oder auch zusätzlich eine Abstützfunktion und/oder Führungsfunktion für die Bauteile übernehmen. Mit der Fördereinrichtung kann außerdem während des Transports und/oder am Ende an der Abgabeseite eine Vereinzelung der Bauteile stattfinden. Ferner ist es möglich, die Bauteile in beliebigen Lagen lagegerecht und lagestabil zu transportieren. Hierbei ist es zudem möglich, auch bei Bauteilen mit einer stapelungünstigen Geometrie durch eine entsprechende Bauteilorientierung dennoch eine Stapelbildung zu ermöglichen.

Weitere Vorteile der beanspruchten Fördereinrichtung liegen in der Bauteilschonung während des Fördervorgangs und bei der Entnahme aus einem Magazin oder bei einem Durchrutschen am Wendelförderer während des Aufstauens. Der Wendelförderer verhindert außerdem, dass sich die Bauteile zu weit verdrehen und bei loser Aufhängung zwischen den Förderwellen durchfallen. Ein weiterer positiver Effekt besteht darin, dass einzeln oder im Paket eingelegte Bauteile durch die Förderwellen in die annähernd richtige Lage gebracht werden. Dadurch ist auch eine relativ ungenaue Eingabe oder Einlage von Bauteilen möglich. Die Fördereinrichtung bietet ferner ergonomische Vorteile und insbesondere eine gleichbleibende und ergonomisch günstige Einlegeposition. Es können stapelbare und nicht stapelbare Bauteile eingelegt und transportiert werden. Der Flächenbedarf, der Bau- und Kostenaufwand sowie der Sicherheitsaufwand können niedrig gehalten werden. Auf der Abgabeseite gibt es geringe Störkonturen, was für automatisierte Handhabungssysteme mit Entnahmegreifern vorteilhaft ist. Wie eingangs erwähnt, können die Bauteile einzeln oder im Paket eingelegt oder aufgegeben werden. Ferner ist es möglich, Bauteile in mehreren Ebenen übereinander oder nebeneinander zu führen und zu transportieren. Die Transportrichtung und die Lage der Fördereinrichtung kann beliebig ausgerichtet sein, insbesondere steigend, fallen oder waagerecht. Die Fördereinrichtung lässt sich zudem standardisieren. Die Bauteilkontur hat im wesentlichen nur Einfluss auf die Ausgestaltung der Förderwellen und insbesondere die Steigung der Wendeln.

Andererseits lässt sich die Fördereinrichtung durch Variation der Förderwellen und der Wendeln an beliebige Bauteile und Transporterfordernisse kostengünstig anpassen. Insbesondere können über biegsame oder gelenkige Förderwellen Förderstrecken beliebiger Form und Länge realisiert werden. Auch das Förderverhalten kann entlang der Fördereinrichtung variiert werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 bis 3:: eine Fördereinrichtung mit einem Wendelförderer in Seitenansicht, Stirnansicht und Draufsicht,
- Figur 4:: eine Variante der Fördereinrichtung in Stirnansicht,
- Figur 5 und 6:: eine weitere Variante der Fördereinrichtung in Stirnansicht und Draufsicht,
- Figur 7 bis 10:: zwei weitere Varianten der Fördereinrichtung in abgebrochener Seitenansicht und geklappter Stirnansicht,
- Figur 11 und 12:: Ausgestaltungen eines Wendelförderers an der Belade- und Entladeseite,
- Figur 13 und 14:: eine weitere Gestaltungsvariante eines Wendelförderers in Stirnansicht und einer vergrößerten Schnittdarstellung,
- Figur 15 bis 17:: eine Förderwelle mit einem Bauteil in verschiedenen Bewegungsstadien beim Durchrutschen im Staufall,
- Figur 18 bis 20:: teilweise vergrößerte Detaildarstellungen der Wendel und unterschiedlicher Kraft- und wegverhältnisse,
- Figur 21 und 22:: eine weitere Variante eines Wendelförderers mit einer verstellbaren Trageinrichtung,
- Figur 23 bis 35:: verschiedene ausschnittsweise Darstellungen von Gestaltungsvarianten der Förderwellen und der Wendeln,
- Figur 36 und 37:: eine Variante der Fördereinrichtung als Entstapler in Seitenansicht und geklappter Stirnansicht,
- Figur 38:: eine Einlegehilfe für Bauteile an einer Fördereinrichtung in Seitenansicht und
- Figur 39:: Fördereinrichtung mit Pufferfunktion zum Ausschleusen von Bauteilen.

Die Erfindung betrifft eine Fördereinrichtung (1) zum Transport von Bauteilen (8) und ein Förderverfahren. Ferner betrifft die Erfindung eine mit einer solchen Fördereinrichtung (1) ausgestattete Bearbeitungsstation (47) .

Bei den Bauteilen (8) handelt es sich bevorzugt um Karosseriebauteile von Fahrzeugen. Die Bauteile (8) sind vorzugsweise Blechbauteile, können alternativ aber auch aus anderen Materialien bestehen. Die Bauteile können eine im wesentlichen ebene Form oder auch kubische Formgebungen haben. Die Bauteile (8) können stapelbar oder nicht stapelbar sein. Sie können ferner eine Formgebung haben, die für eine Stapelbildung ungünstig ist, bei geeigneter Bauteilausrichtung aber eine Stapelung ermöglicht. Im Bereich der Fördereinrichtung (1) können die Bauteile (8) ein oder mehrere Stapel (10,11) bilden, worauf nachfolgend im einzelnen eingegangen wird.

An der Beladeseite oder Zuführseite (6) der Fördereinrichtung (1) können die Bauteile (8) einzeln oder im Paket von einem Bediener (5), ggf. mit einer Einlegehilfe (45), oder mit einer mechanisierten Zuführeinrichtung (46) aufgegeben werden. Auf der anderen Entladeseite oder Abgabeseite (7) der Fördereinrichtung (1) können die Bauteile (8) einzeln oder in Gruppen abgegeben werden.

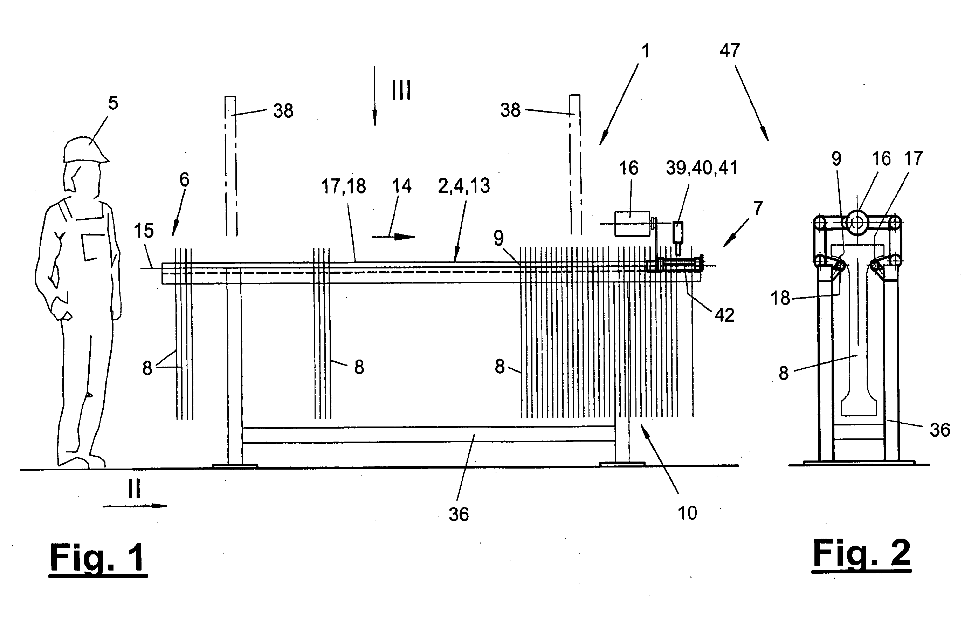

Die Fördereinrichtung (1) kann verschiedene Förderfunktionen haben. Sie kann z.B. einen Stauförderer (4) bilden, auf dem die Bauteile (8) in Förderrichtung (14) transportiert und ggf. während des Förderwegs, insbesondere im Bereich der Abgabeseite (7), aufgestaut oder gestapelt werden. Figur 1 bis 35 zeigen einen solchen Stauförderer (4) in verschiedenen Varianten.

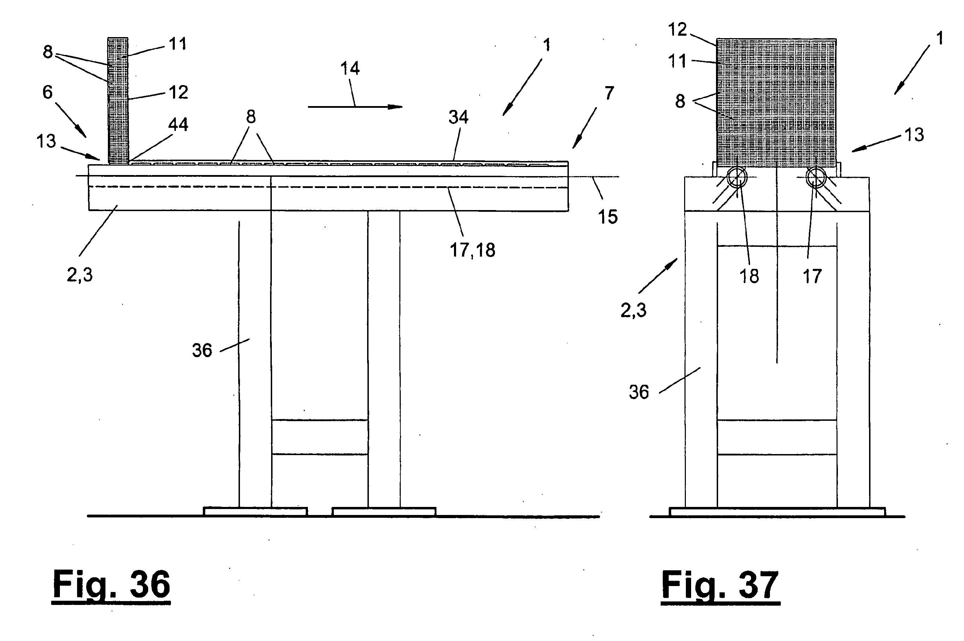

Die Fördereinrichtung (1) kann ferner als Entstapler (3) ausgebildet sein. Figur 36 und 37 zeigen diese Bauform. Die Fördereinrichtung (1) kann ferner eine Kombination für einen Stapler (3) und Stauförderer (4) darstellen. Daneben sind weitere Bauvarianten möglich.

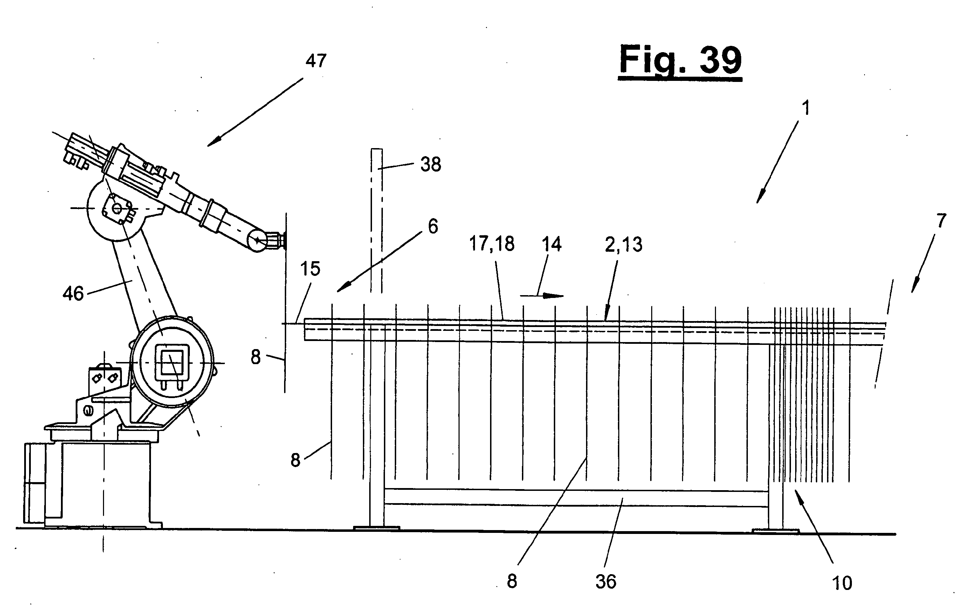

Die Fördereinrichtung (1) kann außerdem zum Ausschleusen von Bauteilen (8) aus automatischen Bearbeitungsstationen (47) dienen, die z.B. von einer mechanisierten Zuführeinrichtung (46), insbesondere einem mehrachsigen Industrieroboter, vollautomatisch der Fördereinrichtung (1) zugeführt werden. Figur 39 zeigt eine solche Variante.

Die Fördereinrichtung (1) weist einen Wendelförderer (2) und eine Einrichtung (13) auf, mit der bei einer Stapelbildung der Bauteile (8), einer lokalen Störung im Förderfluss der Bauteile (8) oder aus anderen Gründen die Relativgeschwindigkeit zwischen dem Wendelförderer (2) und den Bauteilen (8) in Förderrichtung (14) beeinflusst und verändert werden kann. Mit dieser Einrichtung (13) können verschiedene Funktionen verwirklicht werden.

Bei einem Stauförderer (4) ermöglicht die Einrichtung (13) bei einem Förderstopp der Bauteile (8) in Förderrichtung (14) ein Durchrutschen, insbesondere ein Überspringen oder Überheben der gebremsten Bauteile (8) gegenüber dem weiter betriebenen Wendelförderer (2). Im Stapel- oder Staubereich hat der Wendelförderer (2) dann keine Förderfunktion. In anderen Bereichen der Fördereinrichtung (1) kann die Förderfunktion aber noch vorhanden sein, so dass der z.B. an der Entladeseite (7) gebildete Bauteilstapel (10) noch weiter vergrößert wird, bis die gesamte Fördereinrichtung (1) bzw. der Wendelförderer (2) in der gewünschten Weise teilweise oder vollständig mit Bauteilen (8) beladen ist. In dieser Funktion dient die Fördereinrichtung (1) auch als Magazin oder Pufferspeicher für die gestapelten Bauteile (8).

Die Einrichtung (13) kann unterschiedlich ausgebildet sein und eine unterschiedliche Funktionsweise haben, um bei einem Förderstopp die Bauteile (8) vom Fördereingriff mit dem Wendelförderer (2) zu entkoppeln. Dies kann durch eine Gestaltung des Wendelförderers (2) erfolgen, die das erwähnte Durchrutschen der Bauteile (8) entgegen der Förderrichtung (14) ermöglicht. Alternativ kann der Fördereingriff gelöst werden, indem die Bauteile (8) gekippt oder in anderer Weise bewegt werden und dadurch den Förderkontakt verlieren. Dies geschieht vorzugsweise durch eine externe Lagebeeinflussung.

Bei einem Entstapler (3) kann durch die Einrichtung (13) eine Vereinzelung der in einem stationären Bauteilstapel oder Magazin (11) gehaltenen Bauteile und deren Übergabe an den Wendelförderer (2) zum Weitertransport in Förderrichtung (14) bewirkt werden.

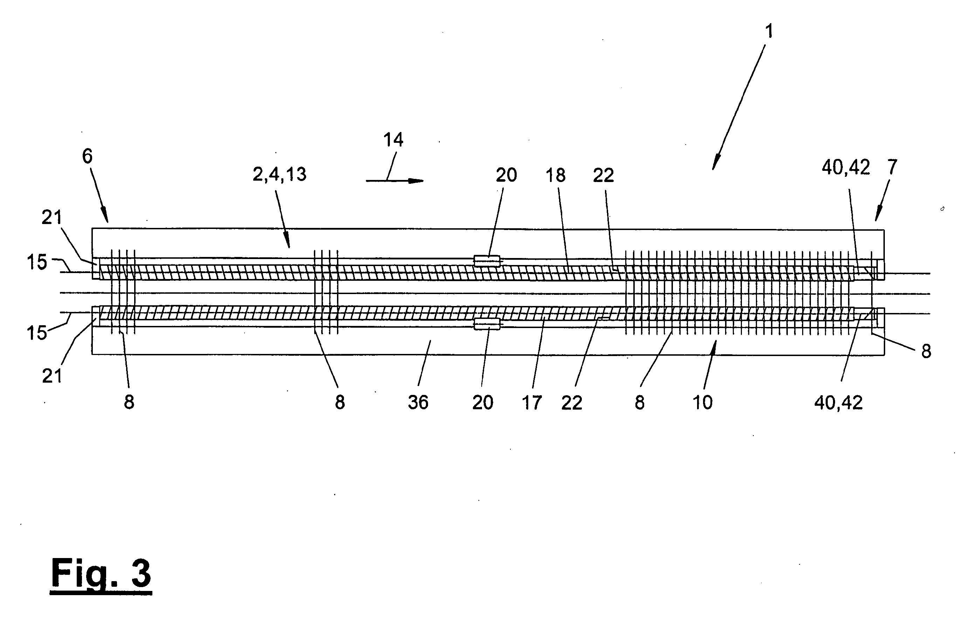

Figur 1 zeigt in einer schematischen Seitenansicht eine Bearbeitungsstation (47) für Karosseriebauteile (8) mit einer Fördereinrichtung (1) und einem Bediener (5). Figur 2 und 3 zeigen die zugehörigen Stirnansicht und Draufsicht gemäß Pfeil II und III von Figur 1.

Die im einzelnen nicht dargestellte Bearbeitungsstation (47) beinhaltet mehrere automatische Handhabungs- und Bearbeitungsgeräte, die z.B. als mehrachsige Manipulatoren, insbesondere als Gelenkarmroboter ausgebildet sind. In der Bearbeitungsstation (47) werden z.B. Fügeoperationen an den Bauteilen (8) durchgeführt. Hierbei können mehrere unterschiedliche Bauteile (8) miteinander in geeigneter Weise durch Schweißen, Kleben, Löten oder dergleichen gefügt werden. Die Bearbeitungsstation (47) ist aus Unfallschutzgründen an ihrer Peripherie mit einer umlaufenden Schutzeinrichtung (38), z.B. einem Schutzzaun, umgeben. Die Bediener (5) dürfen sich in der Regel nur außerhalb des Schutzzauns (38) aufhalten.

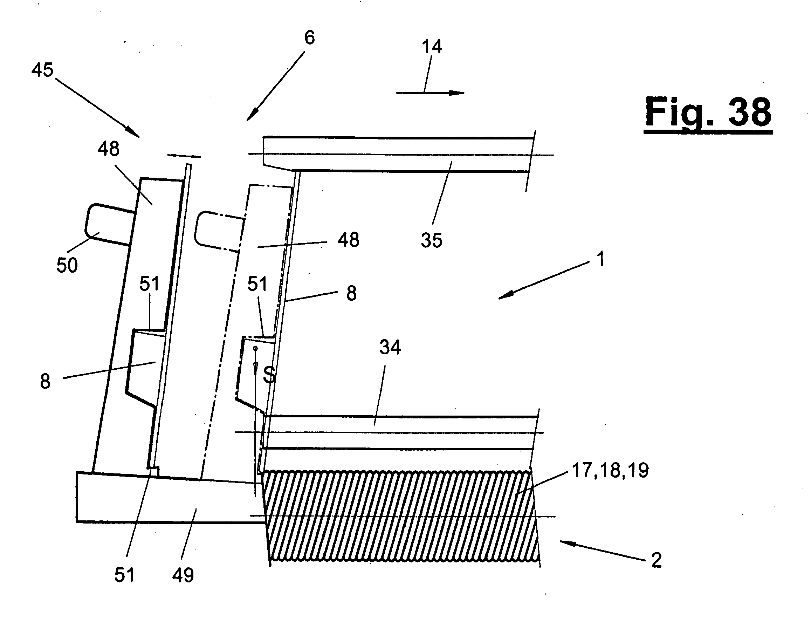

Die Fördereinrichtung (1) dient in der Ausführungsform von Figur 1 der Zufuhr von Bauteilen (8) durch den Schutzzaun (38) zur Bearbeitungsstation (47) und ist in einer dortigen Einlassöffnung angeordnet. Die Fördereinrichtung (1) ragt mit ihrer Beladeseite (6) nach außen durch den Schutzzaun (38). Hier kann der Bediener (5) oder eine mechanisierte Zuführeinrichtung Bauteile (8) einzeln oder im Paket aufgeben. Für die lagegerechte Zuführung von Bauteilen (8) kann insbesondere eine in Figur 38 dargestellte Einlegehilfe (45) vorhanden sein.

Die Bauteile (8) sind vorzugsweise untereinander gleich, können je nach Anwendungsfall und Bearbeitungsprozess aber auch unterschiedlich sein. Hierbei können unterschiedliche Bauteile (8) in Gruppen zusammengefasst werden und gemeinsam von der Fördereinrichtung (1) aufgenommen und transportiert werden. Die Entladeseite (7) befindet sich innerhalb des Schutzzauns (38) im Stationsinnenbereich. Hier können die Bauteile (8) in der gewünschten Weise einzeln oder gruppenweise abgegeben werden. Der Schutzzaun (38) kann in dem in Figur 1 dargestellten Bereich angeordnet sein, wobei die Beladeseite (6) und die Entladeseite (7) entsprechend unterschiedlich weit nach außen oder in den Stationsinnenraum ragen.

Die in Figur 1 bis 3 gezeigte Fördereinrichtung (1) ist als Stauförderer (4) ausgebildet. Von der Abgabeseite (7) ausgehend wird entgegen der zum Stationsinnenraum gerichteten Förderrichtung (14) nach und nach ein Bauteilstapel (10) auf der Fördereinrichtung (1) gebildet, der als Vorrat, Zwischenspeicher oder Magazin für die Bauteile (8) dient und auf der Entladeseite (7) eine kontinuierliche Bauteilzuführung gewährleisten kann. Auch eine Vereinzelung der Bauteile (8) bei der Abgabe aus dem Bauteilstapel (10) ist möglich.

Wie Figur 2 verdeutlicht, können die Bauteile (8) ein oder mehrere Ränder, Vorsprünge oder Flansche (9) haben, mit denen sie in einen formschlüssigen Eingriff mit dem Wendelförderer (2) treten können. Der Transport in Förderrichtung (14) erfolgt hierbei durch Formschluss. Die Ränder, Vorsprünge oder Flansche (9) können an beliebiger Stelle der Bauteile angeordnet sein und einzeln oder mehrfach vorhanden sein. Sie können insbesondere an der außenseitigen Bauteilkontur oder an einer Bauteilöffnung etc. angeordnet sein.

Die Bauteile (8) können beliebig stehend, hängend oder liegend transportiert werden. Alternativ oder zusätzlich ist ein Bauteiltransport durch eine reibschlüssige Verbindung mit dem Wendelförderer (2) möglich. Figur 36 und 37 zeigen diese Variante mit einem z.B. liegenden Transport der Bauteile (8).

Der Wendelförderer (2) kann für die Funktion als Entstapler (3) oder als Stauförderer (4) gleich oder ähnlich ausgebildet sein. Er weist hierzu ein oder mehrere Förderwellen (17,18,19) auf, die sich vorzugsweise in Förderrichtung (14) erstrecken und die um eine zentrale Achse (15) rotieren. Die Wellen (17,18,19) bestehen aus einem vorzugsweise zylindrischen Wellenkörper, der außenseitig mit einer Wendel (22) versehen ist. Die Wendel (22) kann von einer Erhebung oder einer Vertiefung gebildet sein und sorgt über Formschluss und/oder Reibschluss für den Fördereingriff mit den Bauteilen (8). Die Wendel (22) kann eingängig oder mehrgängig sein. Sie kann sich über einen Großteil der Wellenlänge erstrecken und z.B. eine gleichmäßige Schraubenform oder eine andere für eine Drehförderung günstige Gestalt haben. Durch Drehen der Förderwellen (17,18,19) werden die Bauteile (8) in Förderrichtung (14) axial bewegt.

Die Gewinde- oder Schraubenform kann über die Förderlänge gleich sein. Sie kann alternativ durchgehend oder örtlich variieren. Dies kann z.B. die Höhe und/oder die Steigung der Wendel(n) (22) betreffen. Durch eine solche Variation kann z.B. das Förderverhalten verändert werden. Beispielsweise kann im vorderen Bereich, insbesondere im Staubereich und/oder an der Entladeseite (7), die auf die Bauteile (8) einwirkende Förderkraft verringert werden, z.B. durch Minderung der Wendelhöhe.

Die ein oder mehreren Förderwellen (17,18,19) können einstückig oder mehrteilig sein und z.B. aus mehreren hintereinander angeordneten und drehschlüssig miteinander verbundenen Wellenabschnitten bestehen, die ggf. auch ausgetauscht werden können. Die ein oder mehreren Förderwellen (17,18,19) können eine formstabile, steife Formgebung haben oder biegeelastisch ausgebildet sein, wobei z.B. die erwähnten Wellenabschnitte gelenkig miteinander verbunden sind. Die ein oder mehreren Förderwellen (17,18,19) können aus einem beliebig geeigneten Material, z.B. aus Metall, insbesondere Stahl oder einer Leichtmetalllegierung, oder aus Kunststoff oder dgl. bestehen. Auch Verbundmaterialien sind möglich, wobei z.B. die Wellenkörper und die Wendel(n) (22) aus unterschiedlichen Werkstoffen bestehen. Die ein oder mehreren Förderwellen (17,18,19) können sich ferner in gerader Richtung erstrecken oder eine gebogene Form, z.B. als sog. biegsame oder gelenkige Welle, haben.

Der Wendelförderer (2) kann die Form und Funktion eines Schneckenförderers haben. Im Gegensatz zu einem konventionellen Schneckenförderer für Schüttgüter oder Kleinteile bewegt der erfindungsgemäße Wendel- oder Schneckenförderer (2) allerdings die Bauteile (8) vornehmlich in Richtung seiner Längserstreckung. Außerdem liegen die ein oder mehreren Förderwellen (17,18,19) zumindest bereichsweise offen. Die Bauteile (8) können größer als die Höhe der Wendel (22) sein und über den äußeren Umfang der Förderwellen (17,18,19) nach außen ragen.

Die ein- oder mehrfach vorhandenen Förderwellen (17,18,19) können mit ein oder mehreren Führungen (34) für die Bauteile (8) kombiniert werden, wobei sich die Führungen (34) ebenfalls in Förderrichtung (14) erstrecken. Die Führungen (34) sind mit Distanz zu den Förderwellen (17,18,19) angeordnet und greifen außerhalb von diesen an den Bauteilen (8) an. Zusätzlich oder alternativ können ein oder mehrere Kippsicherungen (35) für den Bauteiltransport in Schräglage oder Kipplage vorhanden sein, die vorzugsweise in Förderrichtung (14) ausgerichtet sind. Die Förderwellen (17,18,19) können eine reine Förderfunktion haben, wobei die Bauteile (8) an den Führungen (34) und/oder den Kippsicherungen (35) geführt und abgestützt sind. Ein oder mehrere Führungen (34) können als verstellbare Trageinrichtung (33) ausgebildet sein, um durch eine Veränderung zu einer Förderwelle (17,18,19) die Eingriffstiefe (t) zwischen der Förderwelle (17, 18, 19) und dem Rand (9) des Bauteils (8) zu variieren. Ein oder mehrere Förderwellen (17,18,19) können zusätzlich eine Führungsfunktion und/oder Stützfunktion für die Bauteile (8) haben, wobei sie ggf. die Führungen (34,35) ersetzen können. Auf die Führungen (34,35) kann auch verzichtet werden.

Die Förderwellen (17,18,19) sind in einem Gestell (36) über geeignete Lager (21) gehalten. Bei einer großen Wellenlänge können zusätzlich Stützrollen (20) im mittleren Bereich vorhanden sein. Ein oder mehrere Förderwellen (17,18,19) werden drehend durch einen Antrieb (16) angetrieben, der in Figur 1 und 2 schematisch dargestellt ist. Wenn mehrere Förderwellen (17,18,19) vorhanden sind, kann jede wahlweise einen eigenen Antrieb (16) aufweisen, wobei die Antriebe untereinander in der gewünschten Weise abgestimmt und insbesondere synchronisiert sind. Alternativ kann gemäß Figur 2 ein gemeinsamer Antrieb (16) mit Transmissionen, z.B. Zahnriemengetrieben, vorhanden sein, der mehrere Förderwellen (17,18) in der gewünschten abgestimmten und z.B. synchronisierten Weise antreibt. Bei einer Mehrfachanordnung können sich die Förderwellen (17,18,19) mit gleicher Drehgeschwindigkeit oder mit unterschiedlichen Geschwindigkeiten bewegen. Der oder die Antriebe (16) sind steuerbar und können ein- und ausgeschaltet werden sowie bei Bedarf in ihrer Geschwindigkeit und Leistung verändert werden. In Figur 3 ist der Antrieb (16) der Übersicht halber nicht dargestellt.

Im dargestellten Ausführungsbeispiel von Figur 1 bis 3 sind zwei Förderwellen (17,18) parallel zueinander ausgerichtet, wobei zwischen ihnen die Bauteile (8) hängen und mit beidseits nach außen kragenden schulterartigen Vorsprüngen (9) formschlüssig aufliegen. Die Wendeln (22) der Förderwellen (17,18) sind gegenläufig ausgerichtet und haben gleiche Steigungen. Die Förderwellen (17,18) drehen dementsprechend gegenläufig. In den nachfolgend beschriebenen Ausführungsbeispielen sind Varianten hierzu dargestellt. Bei der gezeigten Ausführungsform sind die Bauteile (8) quer zur Förderrichtung (14) ausgerichtet.

Der in Figur 1 bis 3 dargestellte Wendelförderer (2) hat in seiner Funktion als Stauförderer (4) eine geeignete Rückhaltevorrichtung (39) für die Bauteile (8), die z.B. als steuerbarer Anschlag (41) ausgebildet und an der Entladeseite (7) angeordnet ist. Die Beladung und Zuführung der Bauteile (8) erfolgt schneller als ihre Abgabe an der Entladeseite (7), so dass die Bauteile (8) sich unter Bildung eines Stapels (10) an der Rückhaltevorrichtung (39) aufstauen. Der Stau kann bis zur Beladeseite (6) anwachsen. Die Rückhaltevorrichtung (39) wird entsprechend des von der Bearbeitungsseite gewünschten Zuführtaktes geöffnet und geschlossen. Hierbei kann sie auch eine Vereinzelungsfunktion haben. Der Anschlag (41) kann als fingerartiger Stopper ausgebildet sein, der für den Auslass eines einzelnen Bauteils (8) oder einer Bauteilgruppe zurückgezogen wird und anschließend wieder zum Rückhalt der Folgeteile vorgeschoben wird.

Die Rückhaltevorrichtung (39) kann sich am Ende der Förderwellen (17,18) befinden. Ferner kann zusätzlich eine Vereinzelungsvorrichtung (40) vorhanden sein, die z.B. in der Ausführungsform von Figur 1 bis 3 aus ein oder mehreren weiteren Förderabschnitten (42) besteht, die fluchtend an die Förderwellen (17,18) anschließen. Die Förderabschnitte (42) haben ebenfalls eine Wendel, die allerdings eine größere Steigung aufweist und für einen beschleunigten Transport des aufgenommenen Bauteils (8) sorgt. Die ebenfalls wellenartigen Förderabschnitte (42) können mit einem eigenen und ggf. steuerbaren Antrieb versehen sein. Sie können alternativ antriebsmäßig mit den Förderwellen (17,18) bzw. dem Antrieb (16) gekoppelt sein. Die Rückhaltevorrichtung (39) und der Anschlag (41) können im Bereich der Förderabschnitte (42) angeordnet sein, so dass das freigegebene Bauteil (8) beschleunigt abtransportiert und damit vom Folgeteil im Stapel (10) sicher gelöst wird.

An der Fördereinrichtung (1) können weitere Vorrichtungen angeordnet sein, die der Übersicht halber nicht dargestellt sind. Dies können z.B. Rüttelvorrichtungen oder andere Vereinzelungsvorrichtungen sein, die auf der Förderstrecke die paketweise zugeführten Bauteile (8) voneinander lösen und vereinzeln. Die Wendeln (22) haben ihrerseits eine Vereinzelungswirkung, die durch eine solche Zusatzeinrichtung unterstützt und verbessert werden kann. Ferner kann die Fördereinrichtung (1) eine Sensorik aufweisen, welche den Beladezustand feststellt und den Transport der Bauteile (8) überwacht. Die Fördereinrichtung (1) hat ferner eine geeignete Steuerung, die mit dem Antrieb (16) und den Rückhalte- und Vereinzelungsvorrichtungen(39,40) sowie der ggf. vorhandenen Sensorik verbunden ist.

Im Betrieb können die Förderwellen (17,18) sich permanent drehen und die Bauteile (8) fördern, wobei diese im Stapel oder Stau (10) an den Förderwellen (17,18) in der nachfolgend beschriebenen Weise über die Einrichtung (13) durchrutschen. Der Drehantrieb kann permanent laufen. Er kann alternativ abgeschaltet oder in einen intermittierenden Betrieb umgeschaltet werden, wenn der Stapel (10) bis zur Beladeseite (6) reicht oder die Beladung unterbrochen wird. Ferner kann über die Sensorik festgestellt werden, ob an der Beladeseite (6) Bauteile (8) aufgegeben werden, woraufhin der Antrieb (16) automatisch eingeschaltet wird. Wenn die Beladung beendet oder unterbrochen ist, kann der Antrieb (16) je nach Betrieb der Bearbeitungsstation komplett abgeschaltet oder in einen intermittierenden Betrieb umgeschaltet werden, bei dem die Förderwellen (17,18) und die Förderabschnitte (42) nur taktweise entsprechend der geforderten Bauteilabgabe drehend angetrieben werden. Nach der Abgabe des Bauteils (8) bleiben sie wieder stehen bis eine erneute Abgabeanforderung kommt.

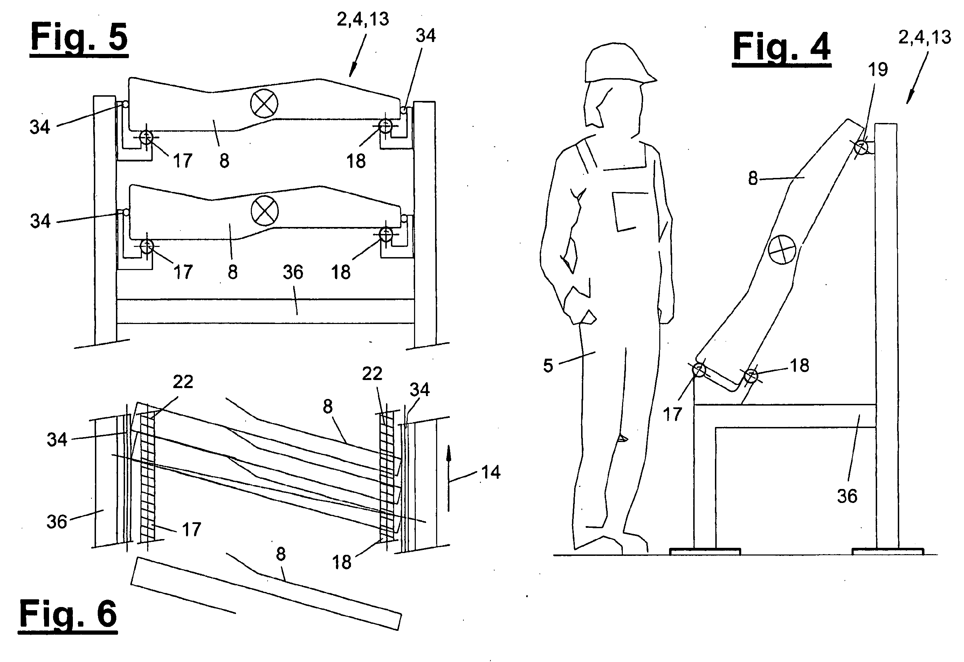

Figur 4 zeigt eine Variante der Fördereinrichtung (1), bei der der Wendelförderer (2) drei im Dreieck verteilt angeordnete Förderwellen (17,18,19) aufweist, mit denen die Bauteile (8) stehend und in Schräglage transportiert werden können.

In der Variante von Figur 5 und 6 ist in Stirnansicht und Draufsicht ein anderer Wendelförderer (2) dargestellt, der für einen liegenden Bauteiltransport auf zwei parallelen Förderwellen (17,18) in Verbindung mit seitlichen Führungen (34) ausgerichtet ist. Figur 5 zeigt hierbei die Variante eines mehrstöckigen Förderers, mit dem mehrere Bauteile (8) übereinander in mehreren Lagen transportiert werden können.

Figur 6 verdeutlicht eine andere Variante der Wellengestaltung. Die Förderwellen (17,18) haben hierbei die gleichen Wendeln (22) und drehen gleichsinnig und z.B. mit gleicher Geschwindigkeit. Durch die im Kontaktbereich parallel ausgerichteten Wendelabschnitte können die Bauteile (8) in einer Schräglage transportiert werden, die durch die entsprechend angeordneten seitlichen Führungen (34) zusätzlich gesichert wird. Nur bei der richtigen Schräglage passen die Bauteile (8) in den Freiraum zwischen den Führungen (34). In der unteren Hälfte von Figur 6 ist außerdem ein Bauteil (8) in einer mehrfach abgekanteten Form dargestellt, die an sich stapelungünstig ist. Durch die zwangsweise eingenommene Schräglage ist jedoch die in Figur 6 gezeigte Stapelbildung möglich, obwohl die Flansche an der Vorder- und Rückseite des Bauteils (8) einander überlappen. Durch die gezeigte Bauteilausrichtung schräg zur Förderrichtung (14) kann jedoch der vordere Flansch des Bauteils (8) den rückseitigen Flansch des vorauslaufenden Bauteils (8) hintergreifen, so dass eine Vernestung der Bauteile (8) möglich ist.

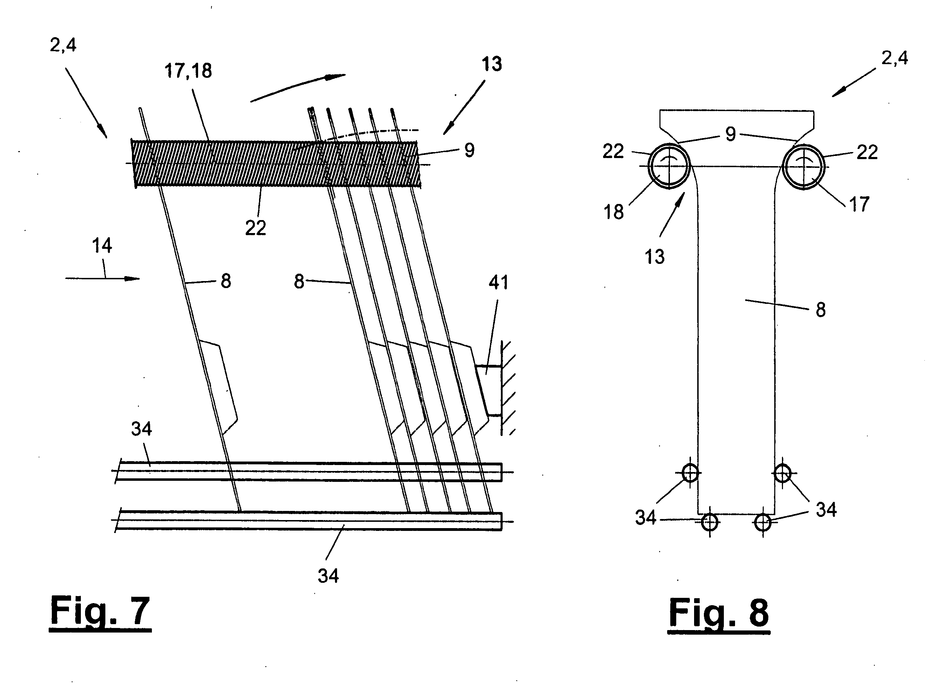

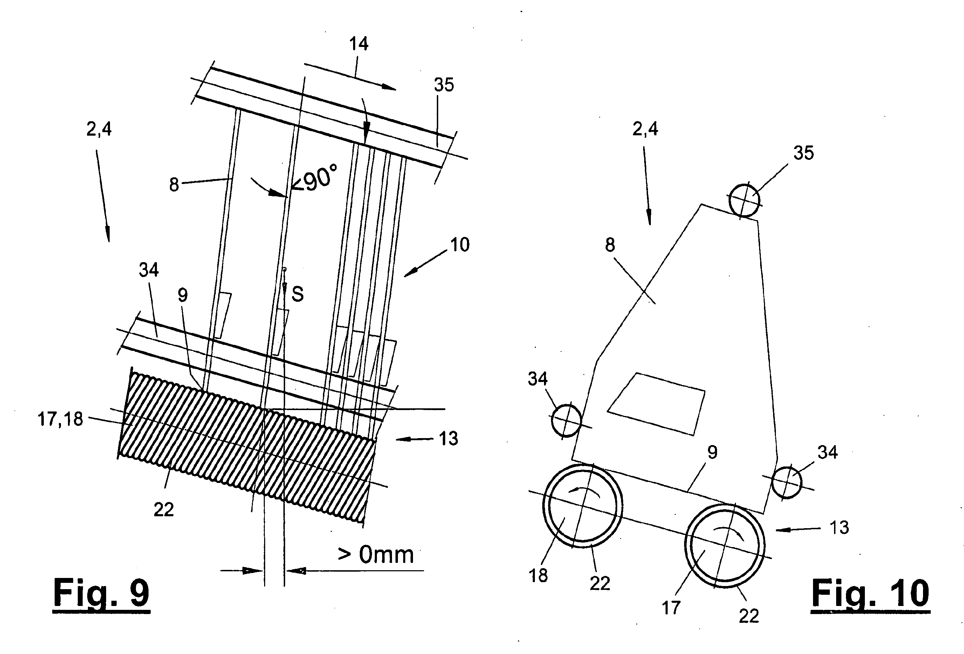

Figur 7 und 8 zeigen eine Variante der Einrichtung (13) zum Ändern der Relativgeschwindigkeit von Förderwelle (17,18) und Bauteilen (8) mittels einer Kippbewegung. Die hier wiederum an den parallelen Förderwellen (17,18) über randseitige Schulter (9) hängenden Bauteile (8) werden im unteren Bereich durch vier stangenartige Führungen (34) in Förderrichtung (14) geführt. Hierbei nehmen die Bauteile (8) eine Schräglage ein, wobei das untere Ende an den Führungen (34) dem oberen und mit den Förderwellen (17,18) im Eingriff stehenden Ende vorauseilt. An einem Anschlag (41) im Förderweg, der ggf. beweglich und insbesondere schwenkbar ist, schlagen die Bauteile (8) an. Der Anschlag (41) befindet sich im unteren Bauteilbereich und hat ggf. eine Anschlagfläche, die eine andere und insbesondere steilere Neigung als die Bauteile (8) in ihrer Schräglage beim Transport aufweist. Die Bauteile (8) können ggf. Ausbuchtungen, Anformungen oder andere Formgebungen aufweisen, auf welche der Anschlag (41) ggf. abgestützt ist. Durch Anlage am Anschlag (41) kippen die Bauteile (8) durch den Fördervorschub und drehen sich um ihre am unteren Ende und an der Anlage (34) befindlichen Kippkante. Dadurch wandern die Schultern (9) nach oben und lösen sich aus dem Fördereingriff mit den Wendeln (22) der Förderwellen (17,18). Die nachfolgenden Bauteile (8) schlagen am gekippten Bauteil (8) an und richten sich ebenfalls mit einer Kippbewegung auf. Im gesamten Stapel wird hierdurch der Fördereingriff gelöst. Figuren 9 und 10 zeigen eine weitere Variante des Wendelförderers (2) in abgebrochener Seitenansicht und geklappter Stirnansicht. Die Bauteile (8) werden hier stehend auf zwei bodenseitigen Förderwellen (17,18) transportiert und seitlich durch zwei Führungen (34) sowie im Kopfbereich durch eine Kippsicherung (35) in Förderrichtung (14) geführt. Die Bauteile (8) nehmen hier ebenfalls eine Schräglage ein, wobei der im Fördereingriff stehende untere Rand (9) in Förderrichtung voreilt. Der Winkel zwischen der Bauteilhauptebene und der Förderrichtung (14) ist hierbei kleiner als 90°. Der Schwerpunkt (S) kann vor dem Rand (9) liegen, so dass die Ausrichtung beim Transport beibehalten wird. Durch die Kippsicherung (35) können in diesem Fall die Bauteile (8) bei einem Förderstopp und einer Staubildung nicht wie im vorigen Ausführungsbeispiel verschwenken, sondern bleiben in Kontakt mit den Förderwellen (17,18). Die Einrichtung (13) ist in diesem Fall anders ausgebildet und sorgt für ein Durchrutschen der drehenden Wendeln (22) gegenüber den Bauteilen (8) in einer nachfolgend im einzelnen beschriebenen Weise. Figur 9 verdeutlicht außerdem die Variante, dass die Förderwellen (17,18) in Förderrichtung (14) schräg abwärts geneigt sind.

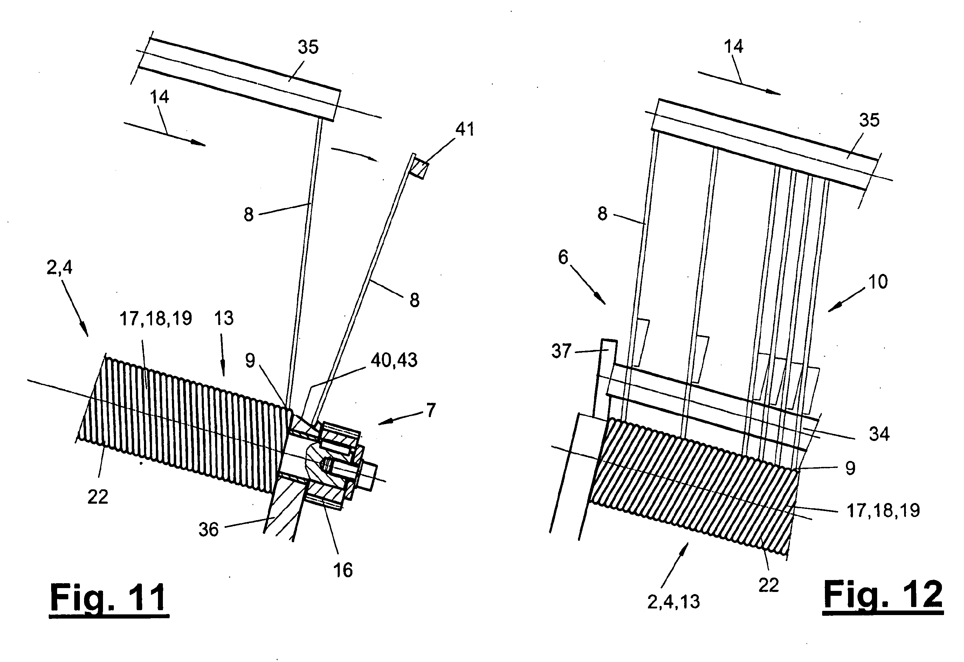

Figur 11 zeigt eine Variante in der Gestaltung der Entladeseite (7) des Wendelförderers (2). In diesem Fall können die konstruktive Gestaltung und der Bauteiltransport gleich oder ähnlich wie im vorhergehenden Ausführungsbeispiel von Figur 10 sein. Die Vereinzelungsvorrichtung (40) wird in diesem Fall von einer schrägen Gleitbahn (43) gebildet, die sich in Förderrichtung (14) an das Wellenende anschließt. Ein Bauteil (8), welches die Wendel (22) am Wendelende verlässt, rutscht auf der Gleitbahn (43) abwärts und kann durch seine Schwerpunktlage gleichzeitig kippen, wobei es mit Anschlägen (41) am Ende der Schräge (43) und im Bauteilkopfbereich zur Anlage kommt. Das hierdurch vereinzelte Bauteil (8) steht dann zur Aufnahme durch einen Roboter mit Entnahmegreifer oder dergleichen bereit. Die schräge Gleitbahn (43) kann Bestandteil des Gestells (36) bzw. der Wellenlagerung sein.

Figur 12 zeigt eine besondere Ausgestaltung der Beladeseite (6) des Wendelförderers (2). Hier kann an geeigneter Stelle eine Einlegesicherung (37) vorhanden sein, welche z.B. als eine der vorgegebenen Bauteilkontur nachgeformte Schablone ausgebildet ist und sich am vorderen Ende der Förderwelle(n) (17,18,19) befindet. Nur die passenden und vorgesehenen Bauteile (8) können die Einlegesicherung (37) passieren und auf den Wendelförderer (2) gelangen. Der Wendelförderer (2) kann ansonsten in den Ausführungsbeispielen von Figur 11 und 12 eine beliebige Gestaltung haben.

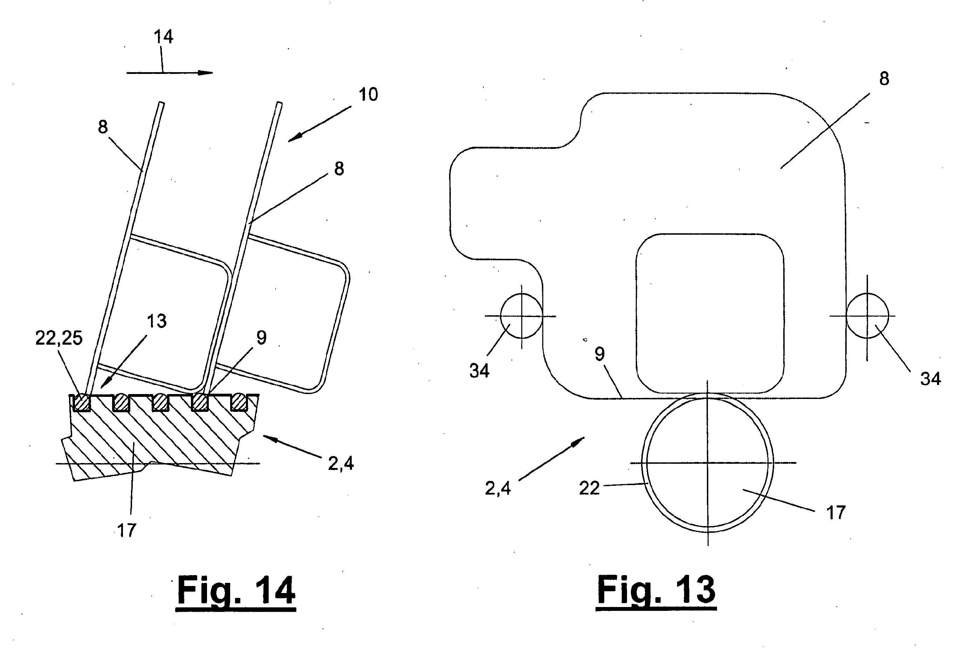

Figur 13 und 14 verdeutlichen eine weitere Variante eines Wendelförderers (2), der hier eine das Bauteil (8) stützende Förderwelle (17) und zwei seitliche stangenartige Führungen (34) aufweist. Die Bauteile (8) werden hier ebenfalls in Schräglage transportiert, wobei sie z.B. eine frontseitige Ausformung haben, mit der sie sich zusätzlich zu ihrem Rand (9) auf der Förderwelle (17) abstützen. Die Wendel (22) kann in ihrer Gestaltung und insbesondere ihrer Steigung auf diese Bauteilform abgestimmt sein, wobei der Rand (9) und die Kontaktstelle der Ausbuchtung jeweils mit einem Wendelabschnitt in Kontakt treten. Die Einrichtung (13) zur Änderung der Relativgeschwindigkeit ermöglicht hier wiederum ein Durchrutschen der Bauteile (8) gegenüber der Wendel (22). Die Einzelheiten hierzu sind nachfolgend beschrieben.

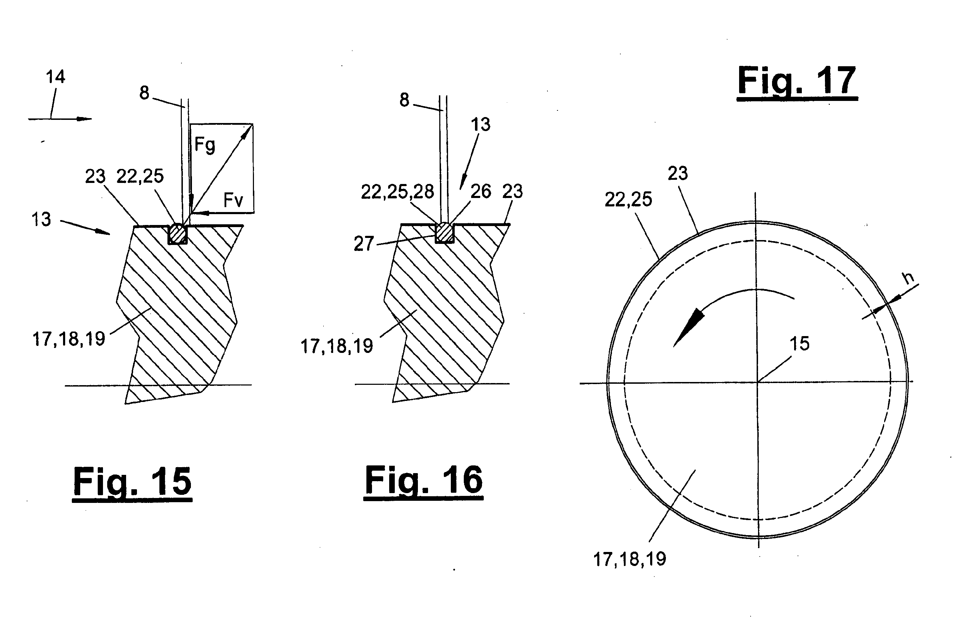

In Figur 15 bis 20 sind Form und Funktion einer ersten Variante der besagten Einrichtung (13) dargestellt und beschrieben. Figur 15 und 16 zeigen hierbei das Bauteil (8) in verschiedenen Bewegungsstellungen gegenüber der Wendel (22). Figur 17 verdeutlicht einen Querschnitt der hier links drehenden Förderwelle (17,18,19) mit ihrer schraubenförmigen Wendel (22). Die durch den Abstand zwischen der Oberseite der Wendel (22) und dem Wellengrund oder Wellenmantel (23) definierte Wendelhöhe (h) ist klein bemessen. Außerdem hat die Wendel (22) eine geneigte oder gerundete Anlaufseite (26) in Förderrichtung (14). Die kleine Wendelhöhe (h) und die Anlaufseite (26) ermöglichen im Staufall ein Aufgleiten, ein Anheben um den Ausweichhub (Ah) über den Wendelzenit und ein Durchrutschen des Bauteils (8) gegenüber der sich drehenden Wendel (22).

Diese Formgestaltung kann auf unterschiedlichem Wege erreicht werden. In Figur 15 und 16 ist z.B. die Wendel (22) als Anbauteil oder Einlegeteil (25) ausgebildet und in einer umfangseitigen schraubenförmigen Nut der Welle (17,18,19) versenkt angeordnet. Das Anbauteil (25) hat z.B. eine kreisrunde Querschnittsform und ist hier als massiver metallischer Draht (28) ausgebildet. In Förderrichtung (14) ist der Draht (28) an den eng anschließenden Nutenwänden formschlüssig geführt. Figur 15 zeigt den formschlüssigen Fördereingriff des Bauteils (8) an der Wendel (22). Bei einem Förderstopp, z.B. einer Staubildung, wird über die Vorschubkraft (Fv) durch die gerundete Anlauffläche (26) eine Hebekraft entwickelt, die der Gewichtskraft (Fg) des Bauteils (8) entgegensteht und diese aufhebt, so dass das Bauteil (8) in der in Figur 16 gezeigten Weise angehoben werden kann und über die Wendel (22) hinweggleitet bzw. durchrutscht. Die Förderwelle (17,18,19) und ihre Wendel (22) können sich dadurch drehen, ohne das Bauteil (8) in Förderrichtung mitzunehmen.

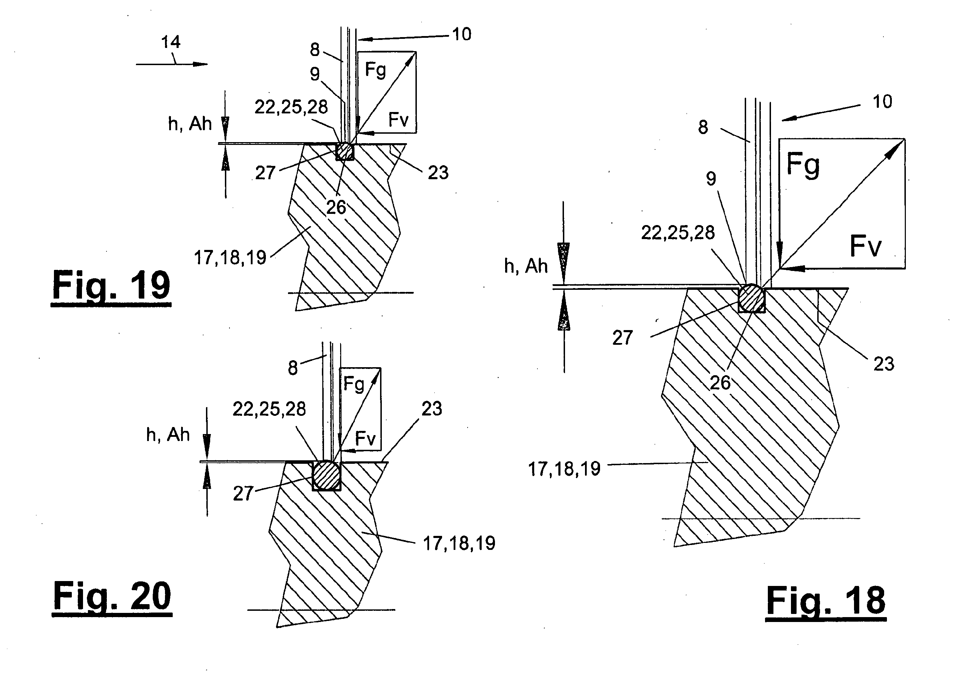

Figur 18, 19 und 20 zeigen verschiedene Varianten in der Ausführungsform der hier ebenfalls kreisrunden und versenkt angeordneten Wendel (22). In Abhängigkeit von der Wendelgeometrie, insbesondere ihrer Steigung,der Wendelhöhe (h) und des Drahtdurchmessers sowie der hieraus resultierenden Form der Anlaufseite oder Anlauffläche (26) ergeben sich unterschiedlich große Kräfteverhältnisse. Bei der Variante von Figur 18 ist eine relativ große Vorschubkraft (Fv) erforderlich, um der Gewichtskraft (Fg) ausreichend entgegen zu wirken. Bei den Varianten von Figur 19 und 20 werden zunehmend kleinere Vorschubkräfte (Fv) benötigt. Zur Erzielung der gewünschten Förder- und Durchrutschbedingungen kann eine entsprechende Anpassung der Wendel (22) an die verschiedenen Bauteile (8) erfolgen.

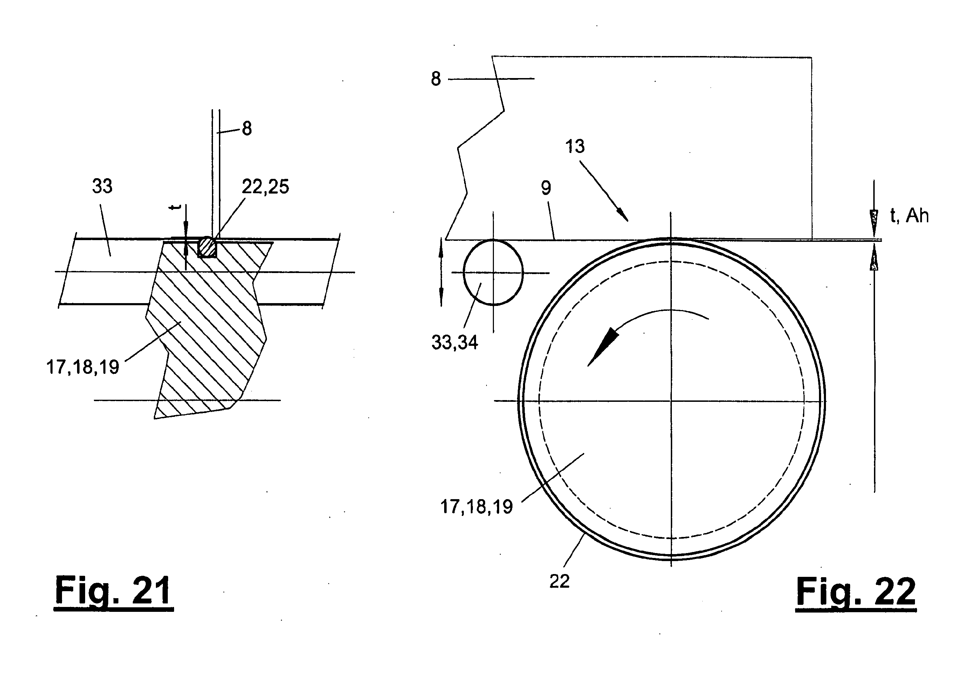

Figur 21 und 22 verdeutlichen eine andere Variante des Wendelförderers (2) und der Einrichtung (13). In diesem Fall kommt die eingangs erwähnte Trageinrichtung (33) zum Einsatz, die z.B. aus ein oder mehreren geeigneten höhenverstellbaren Führungen (34) besteht, auf denen das Bauteil (8) abgestützt und geführt ist. Über die Höhenverstellung der Trageinrichtung (33) relativ zu der hier ortsfest gelagerten Förderwelle (17,18,19) lässt sich die Eingriffstiefe (t) des Bauteilrands (9) mit der Wendel (22) einstellen. Die Wendel (22) kann beliebig ausgebildet sein und besteht in der gezeigten Ausführungsform wiederum aus einem Einlegeteil (25) in Form eines in einer Wellennut versenkt angeordneten Runddrahtes (28). Die Eingriffstiefe (t) bestimmt zusammen mit der Wendelgeometrie die Bedingungen für das Aufgleiten und Durchrutschen der gestoppten Bauteile (8) gegenüber der sich drehenden Wendel (22). Über die Höhenverstellung der Trageinrichtung (33) lässt sich das gewünschte und passende Maß für die Eingriffstiefe (t) bzw. die Eintauchtiefe einstellen.

In Abwandlung der gezeigten Ausführungsform kann mit einer kinematischen Umkehr die Förderwelle (17,18,19) gegenüber einer relativ ortsfesten Führung (34) zur Veränderung der Eingriffstiefe (t) verstellt werden. In weiterer Abwandlung ist eine Verstellung beider Teile möglich.

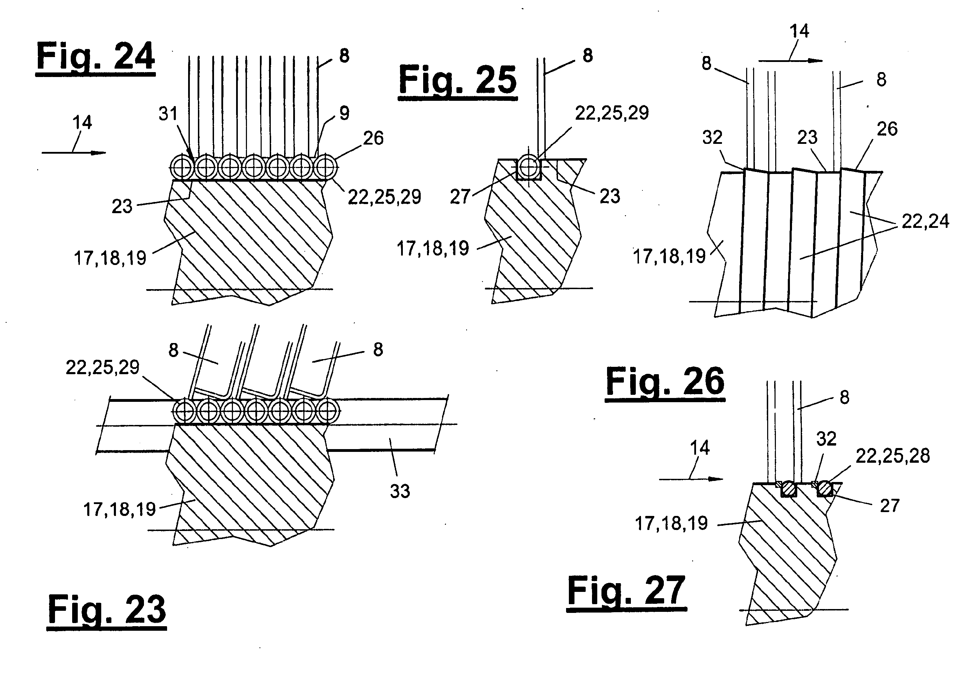

Figur 23 bis 35 zeigen verschiedene Varianten in der Ausbildung der Wendeln (22). Ferner sind Varianten der Einrichtung (13) dargestellt.

In den Ausführungsformen von Figur 23 und 24 ist die Wendel (22) eng gewickelt und hat eine geringe Steigung. Hierbei können die Gewindegänge eng beabstandet sein oder gegenseitigen Kontakt haben. Der Fördereingriff der Bauteile (8) erfolgt in den Zwischenräumen (31) zwischen den Gewindegängen. Die Wendel (22) wird in diesen Ausführungsformen von einem spiralförmig oder schraubenförmig um die massive Förderwelle (17,18,19) gewundenen Rohr gebildet. Um die erforderliche Verformbarkeit des Rohres zu erreichen, kann dieses z.B. aus einer langen Schraubenfeder bestehen. Die Wendel (22) ist in diesem Fall wiederum ein Anbauteil (25) und liegt mit ausreichender Anpresskraft auf dem Wellenmantel (23) dicht und lagefest an. Die Wendel (22) hat auch in diesen Ausführungsbeispielen eine kreisrunde Querschnittsform, wobei zwischen den Gewindegängen die besagten Zwischenräume (31) gebildet werden, die ggf. an die Bauteilrandgeometrie angepasst sind. In Figur 23 ist hierzu eine Variante mit ausbauchenden Bauteilen (8) dargestellt. Die Zeichnung zeigt ferner die Kombination mit einer höhenverstellbaren Trageinrichtung (33) entsprechend des vorbeschriebenen Ausführungsbeispiels von Figur 21 und 22.

In Figur 25 ist eine Abwandlung zu Figur 15 und 16 dargestellt. Anstelle des massiven Drahts kommt hier ein Rohr (29) oder eine Spiralfeder als Anbauteil (25) zum Einsatz und ist versenkt in der Nut (27) angeordnet.

Figur 26 zeigt eine Variante der Wendel (22), die hier als Anformteil (24) der Förderwelle (17,18,19) ausgebildet ist. Das einstückig angeformte Anformteil (24) kann z.B. als das in Figur 26 dargestellte Keilprofil mit einer schrägen Anlauffläche (26) ausgebildet sein. Alternativ kann es sich um ein Rundprofil oder eine andere geeignete Profilform handeln. Ferner zeigt Figur 26 eine Wendelvariante mit einer größeren Steigung, bei der ein Abstand zwischen den profilierten Gewindegängen besteht, indem der Wellenmantel den Gewindegrund (23) des von der Wendel (22) gebildeten Bewegungsgewindes darstellt und in diesem Bereich das Bauteil (8) aufnimmt.

Figur 26 und 27 zeigen außerdem die Anordnung eines Sperrelements (32) an der in Förderrichtung gesehenen Rückseite der Wendel (22). In Figur 26 wird das Sperrelement (32) von einem steilen Rücksprung des Keilprofils gebildet. Bei der Variante von Figur 27 mit der als Rundteil ausgebildeten Wendel (22) besteht das Sperrelement (32) aus einer zusätzlich eingelegten Leiste mit einem prismatischen, z.B. rechteckigen, Querschnitt. In beiden Fällen verhindert das Sperrelement (32) eine unerwünschte Rückkehrbewegung der Bauteile (8) in Förderrichtung (14). Dies ist insbesondere in Verbindung mit einer schräg abwärts geneigten Förderwelle (17,18,19) von Vorteil. Das bei Wellenstillstand ggf. durch Eigengewicht in Förderrichtung (14) rutschende Bauteil (8) schlägt am Sperrelement (32) an und kann dieses nicht überwinden. Hierdurch wird ein Zurückrutschen über die Wendel (22) verhindert.

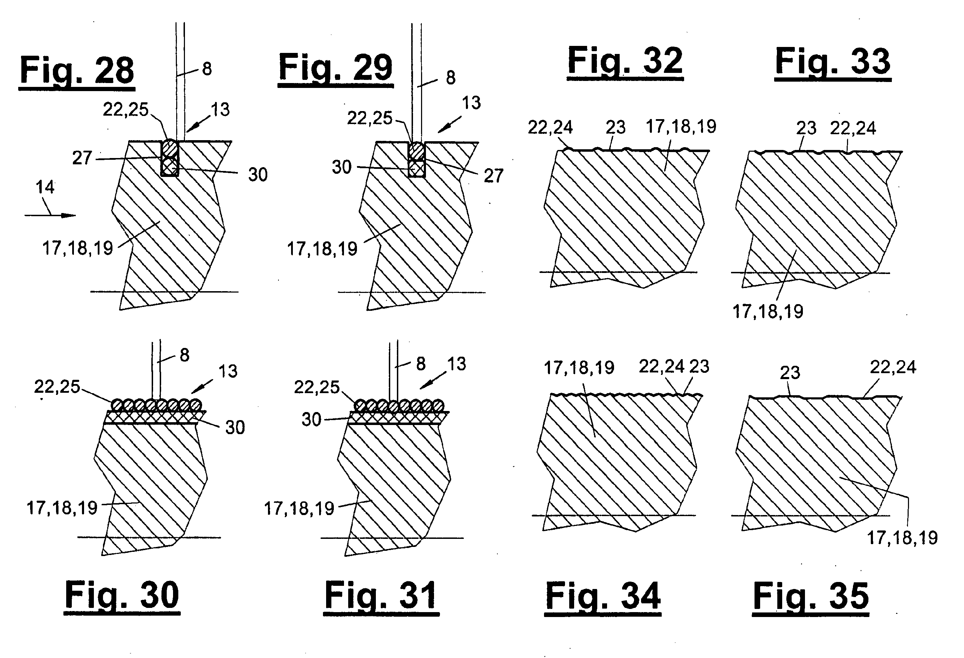

In Figur 28 bis 31 ist eine weitere Variante der Einrichtung (13) zur Änderung der Relativgeschwindigkeit dargestellt. In diesen Varianten kann die Wendel (22) im Staufall ausweichen und das Bauteil (8) durchrutschen lassen. Diese Ausführungsform ist besonders günstig, wenn durch Führungen (34) eine Relativbewegung des Bauteils quer zur Förderwelle (17,18,19) verhindert wird.

Figur 28 und 29 zeigen eine erste Ausführungsform mit einer versenkt in einer Nut (27) angeordneten Wendel (22). Im vertieften Nutgrund ist unterhalb der Wendel (22) ein Federelement (30) angeordnet, welches der Wendel (22) im Staufall ein Eintauchen in die Nut (27) gemäß Figur 29 ermöglicht. Das Federelement (30) kann in beliebig geeigneter Weise ausgebildet sein und z.B. aus einer elastischen Einlage, einer Gummischnur oder dergleichen, bestehen.

In der Variante von Figur 30 und 31 ist ein Federelement (30) zwischen dem massiven Wellenmantel und der Wendel (22) angeordnet. Das Federelement (30) kann z.B. eine elastische schlauchartige Hülle auf der zylindrischen Förderwelle (17,18,19) sein. Die Wendel (22) liegt auf dem Federelement (30) auf, wobei der im Staufall beaufschlagte Gewindegang in das kompressible Federelement (30) eindringen und das Vorbeigleiten des Bauteils (8) ermöglichen kann. Die Wendel (22) ist in der gezeigten Ausführungsform eng gewickelt, kann alternativ aber auch eine größere Steigung haben.

Figur 32 bis 35 zeigen Varianten in der Ausbildung der Wendel (22) als Anformteil (24). Die Zeichnungen verdeutlichen außerdem, dass die Wendel (22) wahlweise als Erhebung oder als Vertiefung ausgebildet sein kann. In Figur 32 und 34 bildet eine schraubenförmige Erhebung die Wendel (22), wobei die Steigung beliebig gewählt werden kann und der zurückspringende Wellenmantel den Gewindegrund (23) bildet.

In der Variante von Figur 33 und 35 ist die umgekehrte Situation dargestellt, in der die Wendel (22) als Vertiefung im Wellenmantel ausgeführt ist und in ihrer Breite auf die Bauteile (8) bzw. den Rand (9) abgestimmt ist.

Figur 36 und 37 zeigen die eingangs erwähnte Ausgestaltung des Wendelförderers (2) als Entstapler (3). An der Beladeseite (6) ist hierbei ein Bauteilstapel (11) quer oder schräg zur Förderrichtung (14) angeordnet und wird von einer Stapelführung (12) umgriffen und geführt. Im Stapel (11) liegen die Bauteile (8) übereinander und sind quer zur Förderrichtung (14) geschichtet. Die Bauteilführung (12) mündet am Wendelförderer (2) und den hier doppelt vorhandenen Förderwellen (17,18). An der in Förderrichtung (14) vorn liegenden Wandung hat die Bauteilführung (12) eine Entnahmeöffnung (44), die auf die Bauteilabmessungen abgestimmt ist und das im Fördereingriff befindliche unterste Bauteil (8) in Förderrichtung (14) passieren lässt. Mit dem Entstapler (3) können die jeweils untersten Bauteile (8) aus dem Stapel (11) entnommen, dabei vereinzelt und in Förderrichtung (14) weiter transportiert werden. Im weiteren Verlauf kann der Wendelförderer (2) auch als Stauförderer (4) in der vorbeschriebenen Art ausgebildet sein. Im weiteren Förderbereich kann außerdem eine geeignete Führung (34) für die in diesem Ausführungsbeispiel liegend und im Reibschluss transportierten Bauteile (8) angeordnet sein. Alternativ können die liegend transportierten Bauteile (8) auch einen quer oder schräg zur Förderrichtung (14) gerichteten Rand, Flansch oder Vorsprung aufweisen für einen formschlüssigen Eingriff mit der oder den Wendeln (22). Sie können alternativ bei einer Wendel (22) mit großer Steigung im Wellengrund zwischen den Gewindegängen Platz finden.

Figur 38 zeigt eine eingangs erwähnte Einlegehilfe (45) für die lagegerechte Zuführung von Bauteilen (8) zur Fördereinrichtung (1). Sie ist insbesondere für die gezeigte schräge Ausrichtung und Zuführung von Bauteilen (8) nützlich. Die Einlegehilfe (45) besteht z.B. aus einem an der Beladeseite (6) angeordneten Bauteilnest (48) mit einer geeigneten Aufnahme (51) für ein einzelnes Bauteil (8) oder ggf. auch für einen Bauteilstapel (nicht dargestellt). Die Aufnahme (51) ist an die Formgebung des Bauteils (8) angepasst und bietet eine formschlüssige Führung, mit der die z.B. schräge Bauteillage sicher gestellt werden kann. Die Aufnahme (51) kann z.B. eine Ausnehmung zur Aufnahme eines vorspringenden Bauteilbereichs aufweisen. Sie kann ferner an geeigneter Stelle, z.B. an der Unterseite, eine Bauteilabstützung bieten. Das Bauteil (8) kann wie in der dargestellten Ausführungsform durch das Eigengewicht und den hinter der unteren Aufnahme (51) befindlichen Schwerpunkt S am Bauteilnest (48) und der Aufnahme (51) gehalten werden. Wo dies nicht möglich ist, können Magnete oder andere geeignete Halteeinrichtungen zum temporären Festhalten des Bauteils (8) eingesetzt werden. Das Bauteilnest (48) ist längs einer z.B. linearen Führung (49) zwischen einer zurückgezogenen Beladestelle und einer Übergabestelle an die Fördereinrichtung (1) hin- und her beweglich. Alternativ sind Schwenkbewegungen oder sonstige Varianten von Zustellbewegungen möglich. An der zurückgezogenen Beladestelle ist Platz zum manuellen oder automatischen Einlegen von ein oder mehreren Bauteilen (8). An der vorgeschobenen Übergabestelle wird das vorderste Bauteil (8) in Förderkontakt mit der Fördereinrichtung (1) und dem Wendelförderer (2) gebracht. Über eine geeignete Positioniereinrichtung wird die Einnahme der korrekten Übergabestellung gesichert.

Die Übernahme des vordersten Bauteils (8) und eventueller weiterer Folgebauteile durch die Fördereinrichtung (1) erfolgt automatisch. Das Bauteilnest (48) wird mittels einer Betätigung (50) zwischen der Belade- und Übergabestelle hin- und her bewegt. Dies kann im einfachsten Fall ein Handgriff sein, mit dem der Bediener das Bauteilnest (48) nach dem manuellen Beladen vorschiebt und nach der Abgabe des Bauteils (8) wieder zurückzieht. Die Betätigung (50) kann alternativ einen Antrieb beliebiger Art für das Bauteilnest (48) aufweisen. Dieser Antrieb kann manuell gesteuert sein oder bei einer automatischen Zuführung mit deren Steuerung verbunden sein und vollautomatisch funktionieren.

Figur 39 zeigt die eingangs erwähnte Variante für den Einsatz einer Fördereinrichtung (1) zum Ausschleusen von Bauteilen (8). Diese werden z.B. innerhalb einer ggf. vollautomatischen Bearbeitungsstation (47) von einer mechanisierten Zuführeinrichtung (46) zugeführt und an der Beladeseite (6) einzeln oder im Stapel an die Fördereinrichtung (1) übergeben. Die Zuführeinrichtung (46) kann z.B. ein mehrachsiger Industrieroboter, insbesondere der dargestellte Gelenkarmroboter mit mindestens sechs Achsen sein. Er besitzt an seiner Roboterhand ein geeignetes Werkzeug zum Halten, Zuführen und Abgeben von ein oder mehreren Bauteilen (8). Die taktweise zugeführten Bauteile (8) werden auf der Fördereinrichtung (1) weitertransportiert, wobei sie ggf. auch durch eine geeignete Öffnung in einem Schutzzaun (38) nach außen bewegt werden können.

Die Bauteile (8) können auf der Fördereinrichtung (1) durch die in den vorhergehenden Beispielen gezeigte Ausbildung der Förderwellen (17,18,19) und der Einrichtung (13) zum Ändern der Relativgeschwindigkeit bei Bedarf aufgestaut werden, wie dies beispielsweise im rechten Teil von Figur 39 beim Stapel (10) dargestellt ist. Dieses Aufstauen kann fallweise erfolgen und eine Sicherheits- und Pufferfunktion sein, falls z.B. die Abnahme der Bauteile (8) an der Abgabeseite der Fördereinrichtung (1) nicht in der vorgesehenen Weise funktioniert. Dies kann z.B. bei Störungen in den nachgeschalteten Vorrichtungen oder Anlagenteilen der Fall sein. Wenn keine Störung oder dgl. vorliegt, werden die Bauteile (8) ohne Staubildung befördert und die Einrichtung (13) tritt nicht in Funktion.

Durch die Pufferfunktion können solche ablaufseitig oder ggf. auch im Bereich der Fördereinrichtung (1) auftretenden Störungen von der eingangseitigen Bearbeitungsstation (47) entkoppelt werden, die dadurch unbehelligt weiter arbeiten kann. Insbesondere kann der Roboter (46) die Fördereinrichtung (1) ungestört mit Bauteilen (8) beladen.

Die Stau- und Pufferfunktion kann außerdem zu einem Ausgleich von Takt- oder Geschwindigkeitsunterschieden zwischen der Beladeseite (6) und der Entladeseite (7) eingesetzt werden. Die Fördereinrichtung (1) kann für diese Sicherheits- und Pufferfunktion eine ausreichende Länge aufweisen. Der Einsatz von biegsamen oder gelenkigen Förderwellen (17,18,19) ermöglicht hierbei auch eine mäanderförmige Gestaltung der Förderstrecke. Alternativ zu solchen Biege- oder Gelenkwellen können auch Übergabestationen zwischen geraden Förderwellen (17,18,19) vorhanden sein.

Abwandlungen der beschriebenen Ausführungsformen sind in verschiedener Weise möglich. Insbesondere können die in den Ausführungsbeispielen gezeigten Ausgestaltungen beliebig untereinander vertauscht oder kombiniert werden. Ferner sind nicht dargestellte Abwandlungen in der Formgebung und konstruktiven Gestaltung sowie in den Einsatzbedingungen möglich. Diese betreffen insbesondere die Gestaltung des Wendelförderers (2) mit seinen schraubenförmigen oder spiralförmigen Fördermitteln, die statt in der gezeigten Ausführung als Förderwellen mit gestaltfesten Wendeln in anderer Form ausgebildet sein können. Die Wendeln können z.B. von umlaufenden Riemen oder Stahlblechen, insbesondere Federblechen mit und ohne Profilierung gebildet werden.

Ferner können die Wendeln aus einem kompressiblen Material bestehen und im Staufall durch flexibles Nachgeben ein Durchrutschen der Bauteile (8) ermöglichen. Die Funktion ist dabei ähnlich wie bei den Federelementen (30).

### BEZUGSZEICHENLISTE

- 1: Fördereinrichtung
- 2: Wendelförderer
- 3: Entstapler
- 4: Stauförderer
- 5: Bediener
- 6: Beladeseite, Zuführseite
- 7: Entladeseite, Abgabeseite
- 8: Bauteil, Karosseriebauteil
- 9: Rand, Vorsprung, Flansch
- 10: Stapel, Bauteilstapel, Stau
- 11: Stapel, Bauteilstapel, Magazin
- 12: Führung, Stapelführung
- 13: Einrichtung zum Ändern der Relativgeschwindigkeit
- 14: Förderrichtung
- 15: Achse
- 16: Antrieb
- 17: Welle, Förderwelle.
- 18: Welle, Förderwelle
- 19: Welle, Förderwelle
- 20: Stützrolle
- 21: Lager
- 22: Wendel, Gewindeprofil
- 23: Wellengrund, Wellenmantel, Gewindegrund
- 24: Anformteil, Profil
- 25: Anbauteil, Einlegeteil
- 26: Anlaufseite, Anlauffläche
- 27: Nut
- 28: Draht
- 29: Rohr, Spiralfeder
- 30: Federelement, elastische Einlage
- 31: Zwischenraum
- 32: Sperrelement
- 33: Trageinrichtung, Tragprofil
- 34: Führung, Führungsstange
- 35: Kippsicherung
- 36: Gestell
- 37: Einlegesicherung
- 38: Schutzzaun
- 39: Rückhaltevorrichtung
- 40: Vereinzelungsvorrichtung
- 41: Anschlag
- 42: Förderabschnitt
- 43: Gleitbahn, Schräge
- 44: Entnahmeöffnung
- 45: Einlegehilfe
- 46: Zuführeinrichtung, Roboter
- 47: Bearbeitungsstation
- 48: Bauteilnest
- 49: Führung
- 50: Betätigung, Handgriff
- 51: Aufnahme

- Fg: Gewichtskraft
- Fv: Vorschubkraft
- Ah: Ausweichhub, Überstand
- h: Wendelhöhe t Eingriffstiefe
- S: Schwerpunkt

## Patentansprüche

1. Fördereinrichtung zum Transport von Bauteilen (8), insbesondere Karosseriebauteilen, wobei die Fördereinrichtung (1) einen Wendelförderer (2) aufweist, **dadurch gekennzeichnet, dass** die Fördereinrichtung (1) eine Einrichtung (13) zum Ändern der Relativgeschwindigkeit zwischen Wendelförderer (2) und Bauteilen (8) in Förderrichtung (14) der Bauteile (8) aufweist, wobei die Einrichtung (13) bei einer Stapelbildung oder einem Förderstopp der Bauteile (8) wirksam ist.

2. Fördereinrichtung nach Anspruch 1, **dadurch gekennzeichnet, dass** die Fördereinrichtung (1) als Entstapler (3) und/oder als Stauförderer (4) und/oder als Ausschleusvorrichtung mit Pufferfunktion ausgebildet ist.

3. Fördereinrichtung nach Anspruch 1 oder 2, **dadurch gekennzeichnet, dass** der Entstapler (3) eine am Wendelförderer (2) mündende Führung (12) mit einer Entnahmeöffnung (44) für einen quer oder schräg zur Förderrichtung (14) angeordneten Bauteilstapel (11) aufweist.

4. Fördereinrichtung nach Anspruch 1 oder 2, **dadurch gekennzeichnet, dass** der Stauförderer (4) eine Einrichtung (13) aufweist, die bei einem Förderstopp die Bauteile (8) vom Fördereingriff mit dem Wendelförderer (2) entkoppelt.

5. Fördereinrichtung nach Anspruch 4, **dadurch gekennzeichnet, dass** die Einrichtung (13) die Bauteile (8) durch ein Kippen gegenüber dem Wendelförderer (2) vom Fördereingriff löst oder die in Förderrichtung (14) gebremsten Bauteile (8) auf dem Wendelförderer (2) durchrutschen lässt.

6. Fördereinrichtung nach einem der vorhergehenden Ansprüche, **dadurch gekennzeichnet, dass** der Stauförderer (4) eine Rückhaltevorrichtung (39) mit einem steuerbaren und beweglichen Anschlag (41) für die Bauteile (8) am Wendelförderer (2) aufweist.

7. Fördereinrichtung nach einem der vorhergehenden Ansprüche, **dadurch gekennzeichnet, dass** der Wendelförderer (2) ein oder mehrere drehend angetriebene (16) Förderwellen (17,18,19) mit einer ein- oder mehrgängigen Wendel (22) aufweist, wobei die Förderwelle(n) (17,18,19) mindestens einen steuerbaren Antrieb (16) aufweist/aufweisen.

8. Fördereinrichtung nach einem der vorhergehenden Ansprüche, **dadurch gekennzeichnet, dass** der Wendelförderer (2) eine oder mehrere Führungen (34) für die Bauteile (8) beim Transport aufweist.

9. Fördereinrichtung nach einem der vorhergehenden Ansprüche, **dadurch gekennzeichnet, dass** der Wendelförderer (2) eine oder mehrere Kippsicherungen (35) für die Bauteile (8) beim Transport aufweist.

10. Fördereinrichtung nach einem der vorhergehenden Ansprüche, **dadurch gekennzeichnet, dass** die Wendel (22) eine geneigte Anlaufseite (26) und eine auf das Durchrutschen der Bauteile (8) abgestimmte Wendelhöhe (h) aufweist.

11. Fördereinrichtung nach einem der vorhergehenden Ansprüche, **dadurch gekennzeichnet, dass** die Wendel (22) ausweichfähig an der Förderwelle (17,18,19) angeordnet ist.

12. Fördereinrichtung nach einem der vorhergehenden Ansprüche, **dadurch gekennzeichnet, dass** der Wendelförderer (2) eine Trageinrichtung (33) für die Bauteile (8) aufweist, wobei die Trageinrichtung (33) und die Förderwelle(n) (17,18,19) relativ zueinander verstellbar angeordnet sind und die Eingriffstiefe (t) zwischen Bauteile (8) und Wendel (22) einstellbar ist.

13. Fördereinrichtung nach einem der vorhergehenden Ansprüche, **dadurch gekennzeichnet, dass** die Wendel (22) eine Schraubenform mit einer an die Bauteile (8) angepassten Steigung aufweist.

14. Fördereinrichtung nach einem der vorhergehenden Ansprüche, **dadurch gekennzeichnet, dass** die Wendel (22) als Anformteil (24) oder als Anbauteil (25) an der Förderwelle (17,18,19) ausgebildet ist.

15. Fördereinrichtung nach einem der vorhergehenden Ansprüche, **dadurch gekennzeichnet, dass** die Wendel (22) in Förderrichtung (14) gesehen an der Rückseite ein Sperrelement (32) für einen Rückhalt der Bauteile (8) aufweist.

16. Fördereinrichtung nach einem der vorhergehenden Ansprüche, **dadurch gekennzeichnet, dass** der Wendelförderer (2) eine Vereinzelungsvorrichtung (40) aufweist, die vorzugsweise an der Abgabeseite (7) angeordnet ist.

17. Fördereinrichtung nach einem der vorhergehenden Ansprüche, **dadurch gekennzeichnet, dass** der Wendelförderer (2) an der Zuführseite (6) eine Einlegesicherung (37) und/oder eine Einlegehilfe (45) aufweist.

18. Fördereinrichtung nach einem der vorhergehenden Ansprüche, **dadurch gekennzeichnet, dass** der Wendelförderer (2) in einem Durchlass an einem Schutzzaun (38) angeordnet ist.

19. Fördereinrichtung nach einem der vorhergehenden Ansprüche, **dadurch gekennzeichnet, dass** dem Wendelförderer (2) an der Beladeseite (8) eine mechanisierte Zuführeinrichtung (46), insbesondere ein mehrachsiger Industrieroboter, für die Bauteile (8) zugeordnet ist.

20. Bearbeitungsstation für Bauteile (8), insbesondere Karosseriebauteile, wobei die Bearbeitungsstation (47) mindestens eine Fördereinrichtung (1) mit einem Wendelförderer (2) zum Transport der Bauteile (8) aufweist, **dadurch gekennzeichnet, dass** die Fördereinrichtung (1) eine Einrichtung (13) zum Ändern der Relativgeschwindigkeit zwischen Wendelförderer (2) und Bauteilen (8) in Förderrichtung (14) der Bauteile (8) aufweist, wobei die Einrichtung (13) bei einer Stapelbildung oder einem Förderstopp der Bauteile (8) wirksam ist.

21. Bearbeitungsstation nach Anspruch 20, **dadurch gekennzeichnet, dass** die Fördereinrichtung (1) nach einem der Ansprüche 2 bis 19 ausgebildet ist.

22. Verfahren zum Transport von Bauteilen (8), insbesondere Karosseriebauteilen, mittels einer Fördereinrichtung (1), **dadurch gekennzeichnet, dass** die Bauteile (8) mit einem Wendelförderer (2) in dessen Längserstreckungsrichtung transportiert werden, wobei bei einer Staubildung oder einem Förderstopp der Bauteile (8) die Relativgeschwindigkeit zwischen Wendelförderer (2) und Bauteilen (8) in Förderrichtung (14) der Bauteile (8) geändert wird.

## Claims

1. Conveying system for transporting components (8), especially vehicle body components, wherein the conveying system (1) has a helix conveyor (2), **characterized in that** the conveying system (1) has a device (13) for changing the relative speed between the helix conveyor (2) and the components (8) in the direction of conveyance (14) of the components (8), the device (13) being operative in connection with stack formation or in connection with stoppage of the conveyance of the components (8).

2. Conveying system according to Claim 1, **characterized in that** the conveying system (1) is configured as a destacker (3) and/or as an accumulating conveyor (4) and/or as a discharge apparatus with buffer function.

3. Conveying system according to Claim 1 or 2, **characterized in that** the destacker (3) has a guide (12) which opens out onto the helix conveyor (2) and has a removal opening (44) for a component stack (11) disposed transversely or obliquely to the direction of conveyance (14).

4. Conveying system according to Claim 1 or 2, **characterized in that** the accumulation conveyor (4) has a device (13) which, when the conveyance is stopped, decouples the components (8) from conveying engagement with the helix conveyor (2).

5. Conveying system according to Claim 4, **characterized in that** the device (13) releases the components (8) from conveying engagement by tilting relative to the helix conveyor (2) or causes the components (8) on the helix conveyor (2) which have been braked in the direction of conveyance (14) to slip.

6. Conveying system according to one of the preceding claims, **characterized in that** the accumulation conveyor (4) has a retaining apparatus (39) having a controllable and movable stop (41) for the components (8) on the helix conveyor (2).

7. Conveying system according to one of the preceding claims, **characterized in that** the helix conveyor (2) has one or more rotationally driven (16) conveying shafts (17, 18, 19) with a single-threaded or multi-threaded helix (22), the conveying shaft(s) (17, 18, 19) having at least one controllable drive (16).

8. Conveying system according to one of the preceding claims, **characterized in that** the helix conveyor (2) has one or more guides (34) for the components (8) during transport.

9. Conveying system according to one of the preceding claims, **characterized in that** the helix conveyor (2) has one or more anti-tilt mechanisms (35) for the components (8) during transport.

10. Conveying system according to one of the preceding claims, **characterized in that** the helix (22) has an inclined leading edge (26) and a helix height (h) tailored to the slippage of the components (8).

11. Conveying system according to one of the preceding claims, **characterized in that** the helix (22) is arranged deflectably on the conveying shaft (17, 18, 19).

12. Conveying system according to one of the preceding claims, **characterized in that** the helix conveyor (2) has a supporting device (33) for the components (8), the supporting device (33) and the conveying shaft(s) (17, 18, 19) being arranged displaceably relative to one another and the depth of engagement (t) between the components (8) and the helix (22) being adjustable.

13. Conveying system according to one of the preceding claims, **characterized in that** the helix (22) has a screw shape, with a pitch matched to the components (8).

14. Conveying system according to one of the preceding claims, **characterized in that** the helix (22) is configured as a mould-on part (24) or as an attachment (25) to the conveying shaft (17, 18, 19).

15. Conveying system according to one of the preceding claims, **characterized in that** the helix (22), viewed in the direction of conveyance (14), has on the rear side a locking element (32) for the retention of the components (8).

16. Conveying system according to one of the preceding claims, **characterized in that** the helix conveyor (2) has a separating apparatus (40), which is preferably disposed on the delivery side (7).

17. Conveying system according to one of the preceding claims, **characterized in that** the helix conveyor (2) has on the supply side (6) a feed protection (37) and/or a feeding aid (45).

18. Conveying system according to one of the preceding claims, **characterized in that** the helix conveyor (2) is disposed in an opening on a guard fence (38).

19. Conveying system according to one of the preceding claims, **characterized in that** to the helix conveyor (2) is assigned on the loading side (6) a mechanized feeding device (46), in particular a multi-axial industrial robot, for the components (8).

20. Machining station for components (8), in particular vehicle body components, wherein the machining station (47) has at least one conveying system (1) having a helix conveyor (2) for transporting the components (8), **characterized in that** the conveying system (1) has a device (13) for changing the relative speed between the helix conveyor (2) and components (8) in the direction of conveyance (14) of the components (8), the device (13) being operative in connection with stack formation or in connection with stoppage of the conveyance of the components (8).

21. Machining station according to Claim 20, **characterized in that** the conveying system (1) is configured according to one of Claims 2 to 19.

22. Method for transporting components (8), in particular vehicle body components, by means of a conveying system (1), **characterized in that** the components (8) are transported with a helix conveyor (2) in the direction of longitudinal extent thereof, the relative speed between the helix conveyor (2) and components (8) in the direction of conveyance (14) of the components (8) being changed in connection with stack formation or in connection with stoppage of the conveyance of the components (8).

## Revendications

1. Dispositif de transport pour le transport de composants (8), en particulier de composants de carrosserie, le dispositif de transport (1) présentant un transporteur hélicoïdal (2), **caractérisé en ce que** le dispositif de transport (1) présente un dispositif (13) pour faire varier la vitesse relative entre le transporteur hélicoïdal (2) et des composants (8) dans la direction de transport (14) des composants (8), le dispositif (13) agissant en cas de formation de pile ou d'un arrêt du transport des composants (8).

2. Dispositif de transport selon la revendication 1, **caractérisé en ce que** le dispositif de transport (1) est réalisé sous forme de désempileur (3) ou sous forme de transporteur d'accumulation (4) et/ou sous forme de dispositif d'évacuation à fonction tampon.

3. Dispositif de transport selon la revendication 1 ou 2, **caractérisé en ce que** le désempileur (3) présente un guide (12) débouchant au niveau du transporteur hélicoïdal (2), avec une ouverture de prélèvement (44) pour une pile de composants (11) disposée transversalement ou obliquement par rapport à la direction de transport (14).

4. Dispositif de transport selon la revendication 1 ou 2, **caractérisé en ce que** le transporteur d'accumulation (4) présente un dispositif (13) qui, dans le cas d'un arrêt du transport, désaccouple les composants (8) de l'engagement de transport avec le transporteur hélicoïdal (2).

5. Dispositif de transport selon la revendication 4, **caractérisé en ce que** le dispositif (13) libère les composants (8) de l'engagement de transport par basculement par rapport au transporteur hélicoïdal (2) ou permet aux composants (8) freinés dans la direction de transport (14) de glisser sur le transporteur hélicoïdal (2).

6. Dispositif de transport selon l'une quelconque des revendications précédentes, **caractérisé en ce que** le transporteur d'accumulation (4) présente un dispositif de retenue (39) avec une butée (41) commandable et déplaçable pour les composants (8) sur le transporteur hélicoïdal (2).

7. Dispositif de transport selon l'une quelconque des revendications précédentes, **caractérisé en ce que** le transporteur hélicoïdal (2) présente un ou plusieurs arbres de transport (17, 18, 19) entraînés en rotation (16), avec une hélice (22) à un ou plusieurs pas, le ou les arbres de transport (17, 18, 19) présentant au moins un entraînement commandable (16).

8. Dispositif de transport selon l'une quelconque des revendications précédentes, **caractérisé en ce que** le transporteur hélicoïdal (2) présente un ou plusieurs guides (34) pour les composants (8) lors du transport.

9. Dispositif de transport selon l'une quelconque des revendications précédentes, **caractérisé en ce que** le transporteur hélicoïdal (2) présente une ou plusieurs protections contre le basculement (35) pour les composants (8) lors du transport.

10. Dispositif de transport selon l'une quelconque des revendications précédentes, **caractérisé en ce que** l'hélice (22) présente un côté d'attaque incliné (26) et une hauteur d'hélice (h) adaptée au glissement des composants (8).

11. Dispositif de transport selon l'une quelconque des revendications précédentes, **caractérisé en ce que** l'hélice (22) est disposée de manière à pouvoir s'écarter au niveau de l'arbre de transport (17, 18, 19).

12. Dispositif de transport selon l'une quelconque des revendications précédentes, **caractérisé en ce que** le transporteur hélicoïdal (2) présente un dispositif porteur (33) pour les composants (8), le dispositif porteur (33) et le ou les arbres de transport (17, 18, 19) étant disposés de manière déplaçable les uns par rapport aux autres et la profondeur d'engagement (t) entre les composants (8) et l'hélice (22) est variable.

13. Dispositif de transport selon l'une quelconque des revendications précédentes, **caractérisé en ce que** l'hélice (22) présente une forme hélicoïdale avec un pas adapté aux composants (8).

14. Dispositif de transport selon l'une quelconque des revendications précédentes, **caractérisé en ce que** l'hélice (22) est réalisée en tant que pièce façonnée (24) ou en tant que pièce rapportée (25) sur l'arbre de transport (17, 18, 19).

15. Dispositif de transport selon l'une quelconque des revendications précédentes, **caractérisé en ce que** l'hélice (22), vue dans la direction de transport (14), présente sur son côté arrière un élément de blocage (32) pour retenir les composants (8).

16. Dispositif de transport selon l'une quelconque des revendications précédentes, **caractérisé en ce que** le transporteur hélicoïdal (2) présente un dispositif de séparation (40) qui est de préférence disposé du côté de la sortie (7).

17. Dispositif de transport selon l'une quelconque des revendications précédentes, **caractérisé en ce que** le transporteur hélicoïdal (2) présente sur le côté d'alimentation (6) une protection d'insertion (37) et/ou un auxiliaire d'insertion (45).

18. Dispositif de transport selon l'une quelconque des revendications précédentes, **caractérisé en ce que** le transporteur hélicoïdal (3) est disposé dans un passage au niveau d'une barrière de protection (38).

19. Dispositif de transport selon l'une quelconque des revendications précédentes, **caractérisé en ce que** le transporteur hélicoïdal (2) est associé, du côté de chargement (6), à un dispositif d'amenée mécanique (46), notamment un robot industriel à plusieurs axes, pour les composants (8).

20. Poste d'usinage pour composants (8), en particulier des composants de carrosserie, dans lequel le poste d'usinage (47) présente au moins un dispositif de transport (1) avec un transporteur hélicoïdal (2) pour le transport des composants (8), **caractérisé en ce que** le dispositif de transport (1) présente un dispositif (13) pour faire varier la Vitesse relative entre le transporteur hélicoïdal (2) et les composants (8) dans la direction de transport (14) des composants (8), le dispositif (13) agissant lors d'une formation de pile ou d'un arrêt du transport des composants (8).

21. Poste d'usinage selon la revendication 20, **caractérisé en ce que** le dispositif de transport (1) est réalisé selon l'une quelconque des revendications 2 à 19.

22. Procédé pour le transport de composants (8), en particulier de composants de carrosserie, au moyen d'un dispositif de transport (1), **caractérisé en ce que** les composants (8) sont transportés avec un transporteur hélicoïdal (2) dans sa direction d'étendue longitudinale, et dans le cas d'une formation de pile ou d'un arrêt du transport des composants (8), la vitesse relative entre le transporteur hélicoïdal (2) et les composants (8) dans la direction de transport (14) des composants (8) est modifiée.
